Europäisches Patentamt

European Patent Office

Office européen des brevets

(19)

(11) Publication number : **0 526 918 A2**

(12) # EUROPEAN PATENT APPLICATION

(21) Application number : **92200827.1**

(22) Date of filing : **23.03.92**

(51) Int. Cl.⁵ : **G06F 15/62**

(30) Priority : **12.06.91 US 714903**
**26.07.91 US 736181**

(43) Date of publication of application :
**10.02.93 Bulletin 93/06**

(84) Designated Contracting States :
**AT BE CH DE ES FR GB IT LI NL SE**

(71) Applicant : **AMPEX CORPORATION**
**401 Broadway M.S. 3-35**
**Redwood City California 94063-3199 (US)**

(72) Inventor : **Brown, David E.**
**21 Rocklyn Drive**
**W. Simsbury, Connecticut 06092 (US)**

(74) Representative : **Horton, Andrew Robert Grant**
**et al**
**BOWLES HORTON Felden House Dower Mews**
**High Street**
**Berkhamsted Hertfordshire HP4 2BL (GB)**

(54) **Image transformation on a folded curved surface.**

(57) A special effects system has an image processing system (50) to receive an input image signal representing an image to be folded and to provide a folded output image signal. A key processing system (80) receives an input key signal to define a portion of the image selected for viewing. It operates in parallel with the image processing system to generate an output key signal which has undergone the same selected spatial transformation relative to the input key signal as did the image. A spatial transformation system (26,800,900) operates on the input image signal so as to be able to spatially transform the input image signal on a folded curved surface. The spatial transformation system can be arranged as a separable, two pass transformation process and functions either with h-pass first operations, followed by v-pass operations or vice versa.

FIG. 6

EP 0 526 918 A2

**Field of the Invention**

This invention relates to image transformation and, more particularly, to the special effects related to the spatial transformations of folding images on curved surfaces.

**Description of Related Art**

In the digital special effects art, there exist systems for spatially transforming images by the separate transformation of each dimension of the image. For example, U. S. Patents 4,463,372; 4,468,688; 4,472,732; 4,631,750 and 4,908,874, the teachings of each of which is incorporated herein by reference, disclose various features of a raster scan television spatial transformation system that includes a first transposing memory for each color component, a vertical transformation system, a second transposing memory for each color component, and a horizontal transformation system. The first transposing memory provides a change of scan direction, or a first pass, from horizontal to vertical. The vertical transformation system transforms vertically scanned video information in the vertical direction. The second transposing memory provides a change of scan direction, or a second pass, from vertical to horizontal. The horizontal transformation system transforms horizontally scanned video information in the horizontal direction for producing a color component output signal. The two-pass spatial transformation system also includes a control panel having a three-axis joystick and a set of keys by way of which particular functions can be adjustably assigned to the joystick. Thereafter and in response to operator provided control information, image transformations such as enlargements, reductions, translations and three-dimensional perspective rotations of images can be readily achieved and displayed, for example, on a television monitor. These and other features may be found in an ADO® special effects system, which is manufactured by the assignee of this patent.

Generally, a two-pass transformation replaces a two-dimensional transformation with a sequence of orthogonal and simpler one-dimensional transformations. As a result, it is known in the art that two-pass transformations can afford certain performance advantages including superior image quality particularly in the digital signal processing operations that are commonly related to image interpolation and decimation and that are commonly subject to typical image memory store constraints like word size and transfer rate.

Notwithstanding, when an image is transformed so as to fold over onto itself or to overlap itself on a curved surface, known two-pass spatial transformation methodologies have been unable to provide the desired overlap. This disadvantage has generally prevented an entire class of curved surfaces as candidate geometries for two-pass transformations.

**SUMMARY OF THE INVENTION**

These and other problems are solved and these and other objects are achieved in accordance with the principles of my invention in which a method, system and apparatus include the ability to perform separable, two-pass image transformations onto folded curved surfaces. An image special effects system includes an image processing system, which receives an input image signal representing an image to be folded and which provides a folded output image signal. A key processing system receives an input key signal, which defines a portion of the image selected for viewing and operates in parallel with the image processing system to generate an output key signal which has undergone the same selected spatial transformation relative to the input key signal as does the image. A spatial transformation system is coupled to the image processing system and operates on the input image signal so as to be able to spatially transform the input image signal on a folded served surface. The spatial transformation system can be arranged as a separable, two pass transformation process and functions either with horizontal pass ("h-pass") first operations, followed by vertical pass ("v-pass") operations or with v-pass first operations, followed by h-pass operations.

A proportional switcher has first and second image signal inputs and also has key signal inputs. The proportional switcher generates an output image signal as a combination of image signals received at its first and second image signal inputs in proportion to the key signals. The transformation processing system (a) receives a second image signal and an input key signal defining a region of the second image signal to be included in the output image signal, (b) performs a spatial transformation upon both the second image signal and the input key signal to produce a spatially transformed second image signal and a spatially transformed key signal, (c) provides the transformed second image signal to the second image signal input of the proportional switcher and the transformed key signal to the key signal input of the proportional switcher, and (d) spatially transforms the second image signal and the input key signal by folding the image represented by the second image signal over itself. The image transformation system separably processes each coordinate direction of the image represented by the image signals, for example, it can process the transformation of a horizontal coordinate direction and a vertical coordinate direction, either direction being processed before the other direction. The image transformation system can operate on a first signal representing the front view of an image and a second image signal representing the back view of the image to be spatially transformed by folding the image to create the effect of curling the page in such a manner that parts or all of both its front view and its back view become visible.

## BRIEF DESCRIPTION OF THE DRAWING

These and other advantages of the present invention will become apparent from the following detailed description when taken in conjunction with the accompanying drawing in which:

FIG. 1 is a diagram of a prior art two-pass system for spatially transforming images and is useful in describing the principles of my invention;

FIGs. 2 to 5 are pictorial representations that are useful in describing a two-pass transformation and are useful in describing the principles of my invention;

FIG. 6 is a diagram of a two-pass special effects system for spatially transforming images in accordance with the principles of my invention;

FIG. 7 is a diagram of a source address generator for use in the system of FIG. 6 in accordance with the principles of my invention;

FIG. 8 is a more complete diagram of the source address generator of FIG. 7 for use in the system of FIG. 6 in accordance with the principles of my invention; and

FIG. 9 is a diagram of a curved surface image, which is useful in describing the principles of my invention.

## DETAILED DESCRIPTION

With the help of FIG. 9, there is now described an example of an image transformation onto a curved surface. The example uses a pictorial representation of a page from a book as the image to be transformed on a curved surface. Image 900 is shown in three-dimensional space. As either the right-hand edge of image 900 or the left-hand edge of image 900 (here for purposes of illustration only and not by way of limitation let us focus on the left-hand edge of image 900 and specifically let us focus on area 905 of image 900) is moved or folded over the image a page turn special effect occurs. Note as area 905 is raised upward and curled to the right a direction of motion 950 occurs, here a left-to-right direction of motion. Also note that continuation of the curled motion of area 905 in the generally left-to-right direction results in area 905 folding over, or overlapping, image 900. Further note that the optical result of the overlap is that the top side of the right hand area of image 900 may remain visible under the curl while the bottom side of area 905 becomes visible over the curl. Still further note that as area 905 is moved completely from the left hand side of image 900 in the described curling motion to become the right hand side of image 900, the top and the bottom of image 900 are interchanged so that the view to the observer is such that the observer now sees the bottom of image 900, that is, as seen by the observer of image 900 the bottom of image 900 is now on the top and is visible to the observer whereas the top of image 900 is now on the bottom and may not be visible to the observer. Finally, for purposes of illustration only and not by way of limitation, note that the top side of image 900 may be different than the bottom side of image 900 or even that image 900 may have transparency so that one can see through it or even that the top side may be a mirror image of the top side. These and other special effects are made possible using the principles of my invention.

Image 900, which is drawn to resemble a page, turns about a line of intersection 930 formed by the intersection of two asymptotic planes 910 and 920, which are embraced by a hyperbolic manifold 940. Image 900 is on hyperbolic manifold 940. The page turn effect is obtained by mapping the two-dimensional source image onto a hyperbolic manifold in three-dimensional space. The resulting object is then projected orthogonally back to two-dimensional space to create the target image, i.e. the transformed image. FIG. 9 then conceptually shows the target image in its three-dimensional form.

It is anticipated that the foregoing example and brief discussion will make the following detailed description more easily understood by the skilled artworker.

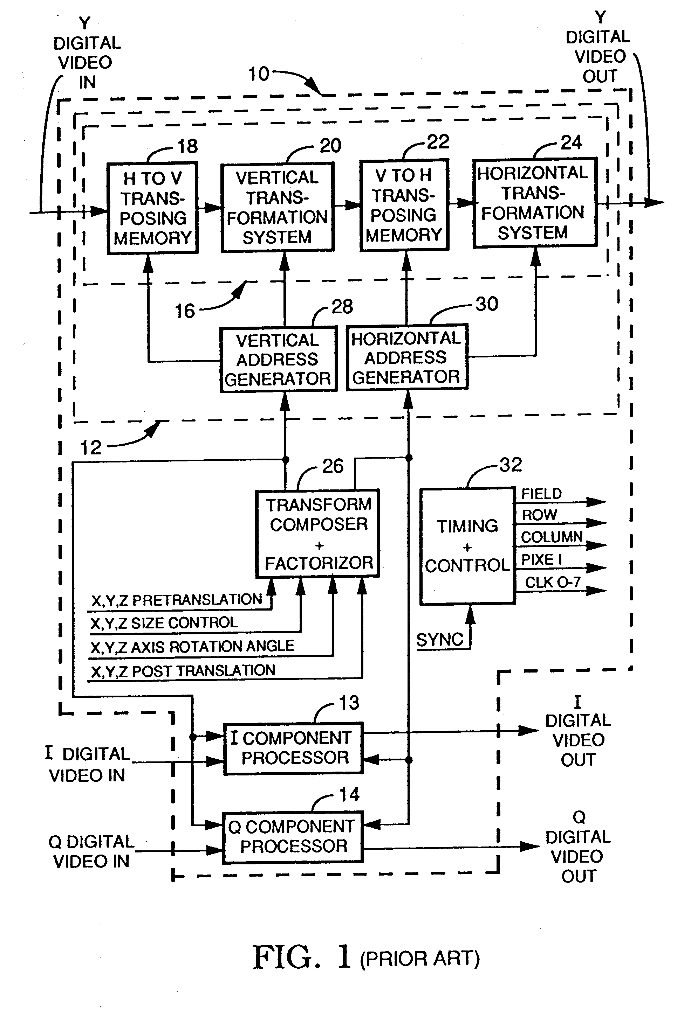

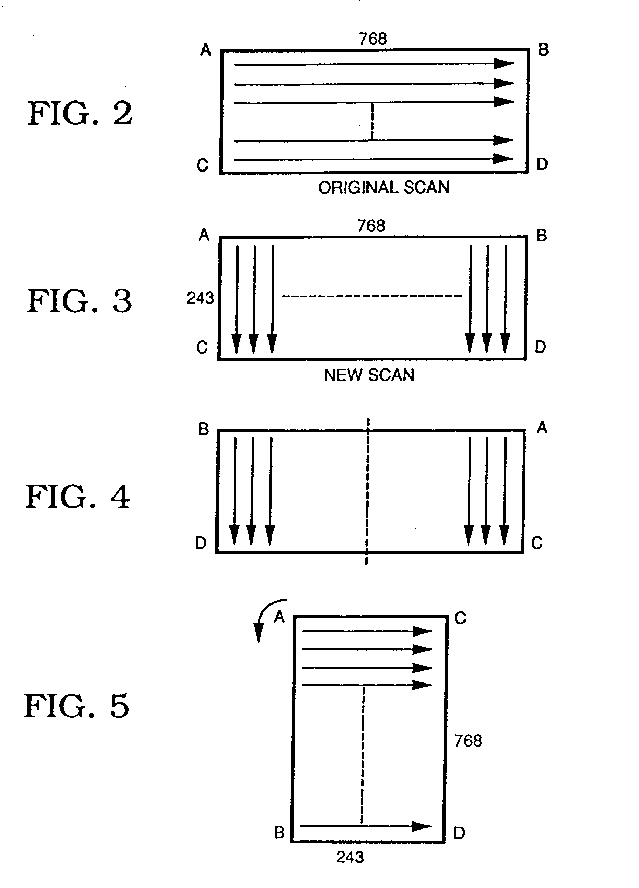

Turn now to my FIG. 1, which is taken from any of the several aforecited patents, for example, see FIG.1 in U. S. Patent No. 4,908,874 or see FIG. 3 in U. S. Patent No. 4,463,372, both of which patents are incorporated herein by reference, a prior art spatial transformation system 10, which operates separately with respect to each coordinate direction in a dimensionally interdependent spatial transformation, is shown in the specific embodiment of a transformation system for a standard raster scan television video signal. As an aside, it may be noted that, inasmuch spatial transformation system 10 operates separately with respect to each coordinate direction, it may be said to be a "*separable*" spatial transformation system. Further, inasmuch spatial transformation system 10 operates to transform each coordinate direction during a separate and distinct coordinate transformation "*pass*", it may be said to be a two-pass spatial transformation system. Continuing, that embodiment is described in terms of a device that accepts separate digitized versions of the Y, I and Q components of a horizontal left-to-right, vertical top-to-bottom, scan NTSC color television signal. This signal is 525 lines, 2-to-1 interlaced, with a field rate of 60 hertz (Hz). For each component there are eight bits per data sample or pixel. The Y or luminance component is sampled at 4 times the NTSC color subcarrier frequency ($f_{sc}$) of 3.579545 megahertz (MHz). The I and Q components are sampled at the subcarrier rate. We discuss the transformation of the Y component first. The I and Q components are handled similarly. The period between Y data samples (pixels) is $1/(4f_{sc})$ or approximately 70 nanoseconds (ns). There are exactly 910 data samples per 63.5 microseconds (μs) horizontal scan line. Only 486 of the 525 lines in a frame contain active picture data, the rest are devoted to retrace blanking.

The transformation system 10 includes three video component processors 12, 13 and 14, one for each of the Y, I and Q components of the color television video signal. It will be appreciated that other representations for the television signal such as red, green, blue or Y, U, V could be used alternatively. Each of the component processors 13 and 14 may be implemented as duplicates of the component processor 12 which is shown in greater detail in FIG. 1 and which will be described in greater detail hereinafter.

The Y component processor 12 receives as an input a Y digital video component of a video image in raster scan television order. The Y component is passed serially through a signal processing path 16 which includes a horizontal-to-vertical transposing memory 18, a vertical transformation system 20, a vertical-to-horizontal transposing memory 22, and a horizontal transformation system 24 to produce a digital Y video output component which has been fully transformed in two directions, one direction at a time. Again the spatial transformation is said to be separable into two passes, one pass for each direction of spatial transformation. A transform composer and factorizor 26 receives operator input command signals, for example, from a control panel and processor 610 through a high level controller 620, and in response thereto generates transformation information for the separate vertical and horizontal directions which is communicated to a vertical address generator 28 and a horizontal address generator 30, respectively. Because the image transformations for each of the color components are substantially identical, the vertical and horizontal transformation information may also be communicated to I component processor 13 and Q component processor 14 without need for duplication of the transform composer and factorizor 26 for each color component. A timing and control circuit 32 develops basic timing and control signals for use throughout the spatial transformation system 10 in response to an incoming synchronization signal.

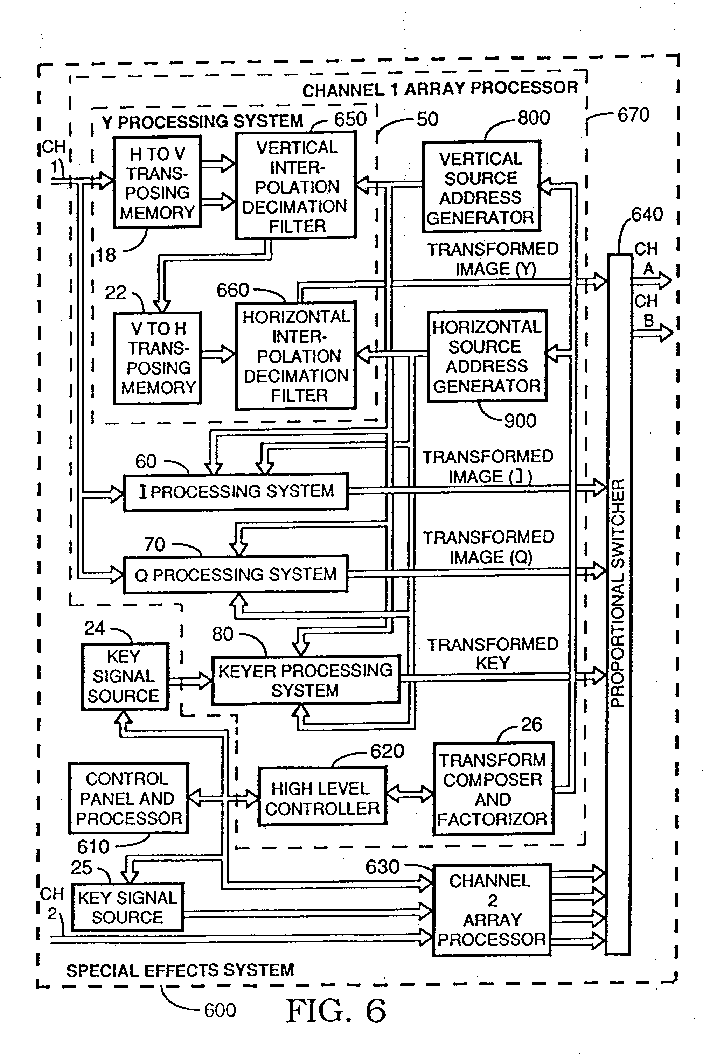

Also, although not shown in my FIG. 1 but rather as is shown in my FIG. 6, which is patterned after FIG. 1 of U. S. Patent No. 4,463,372, a respective keyer processing system 80 of a respective channel array processor 670 or 630 for each of a plurality of channels in special effects system 600 can be connected to operate in parallel with the video component processors 50, 60, and 70 to transform an input key signal from a key signal source 24 or 25 indicating a portion of a video image to be viewed in exactly the same way as the image defined by the input video signal. Here, for purposes of illustration only and not by way of limitation, we show two input channels CH1 and CH2 and hence two array processors called respectively channel 1 array processor 670 and channel 2 array processor 630. The transformed output key signal from the key processing system 80 thus exactly defines the same proportions of the output video image as it did for the input video image notwithstanding significant changes in the image shape which may result from a selected spatial transformation. A proportional switcher 640 can be connected to receive a first transformed image from a channel 1 array processor 670 of the spatial transformation system of special effects system 600 and a second transformed image from a channel 2 array processor 630 and mix them in proportion to the magnitude of the key signals generated by the respective key processing systems 80. The image from a first input channel CH1 may thus be smoothly blended into the image of a second input channel CH2 to eliminate aliasing along a boundary between two adjacent images. The transformation system may further have respective key signal generator source 24 or 25 be adapted for providing an internal key signal defining a standard sized video image while the key processing system 80 may include a switch coupled to permit an operator to select either the internal key signal or the externally generated key signal. A cropping circuit in the respective key signal sources 24 or 25 may, responsive to operator control signals, modify the selected key signal by imposing even more restrictive limits on the boundary of the key signal selected viewing area than are imposed by the original key signal. The selectively restricted key signal can be used as an input key signal by the key processing system. By performing the same spatial transformation upon the key signal as upon the input video image, the key signal precisely defines the borders of the selected viewing region to eliminate undesirable demarcation lines between the boundaries of two intermixed video images when they are displayed, for example, on a television monitor.

Thereafter and in response to operator provided control information, not only are image transformations such as enlargements, reductions, translations and three-dimensional perspective rotations of images readily achieved and displayed, for example, on a television monitor but also special effect characteristics such as fold opening angles and fold directions as well as the extent of fold overlap and fold conformity to relevant defining geometry, boundaries and three dimension planes, among others things, can readily be defined and displayed, for example, on a television monitor.

## (A) Some Theory of Spatial Transformation Onto Non-Folded Surfaces

A procedure for spatially transforming a two-dimensional sampled image according to a dimensionally interdependent spatial transformation is now described. Common examples of spatial transformations are translation, contraction, expansion, rotation and perspective projection. The concept however is quite general and also includes, for example, images such as those produced by a fish-eye lens or a fun house mirror.

Mathematically an image is determined by three functions of position that give the intensities of the three color components at each point within the boundary of the image. We denote our original or source image as

$$s_i(u,v) \text{ for } i = 1,2,3 \quad (2)$$

where u and v are independent coordinates that range over the area of the source picture to indicate position in respective coordinate directions and subscript i selects one of the three primary color components. The transformed target image will be written as

$$t_i(x,y) \quad (4)$$

where x and y are independent coordinates that range over the area of the target. A spatial transformation is a relation that ties x and y to u and v such that the following is true

$$t_i(x, y) = s_i(u, v) \quad (6)$$

The primary intensities at each point (x,y) in the target are determined by those at some point (u,v) in the source.

As is known in the art related to the spatial transformation of images on non-folded surfaces, for each (x,y) there should be only one (u,v) to avoid the possibility of specifying two intensities for the same primary color component at the same point. Thus the relation between them is a function of (x,y):

$$(u,v) = f(x,y)$$

or

$$u = f_u(x, y)$$

$$(8)$$

$$v = f_v(x, y)$$

in component form.

As an aside and as will be made more clear later on, it may be appropriate to mention now that, in accord with the principles of my invention, which are not limited to non-folded surfaces, for each (x,y) there may be more than one (u,v) and hence there is the possibility of specifying more than one intensity for the same primary color component at the same point. Thus the relation between them could be a function of the form:

$$t_i(x, y) = s_i(u_1, v_1)$$
$$\text{or} \quad (9)$$
$$t_i(x, y) = s_i(u_2, v_2)$$

where the subscripts one or two with u and v indicate respectively a first and a second possible source point. On the one hand, that possibility then gives rise to the need for a methodology to determine which point or points out of a plurality of points should be selected. On the other hand, it is also worth mentioning that more than one point may be selected out of a plurality of points, when, for example, it is desired to employ a transparent image having one scene behind another scene. One could envision a plastic page being folded so that crayon writings on an underside are visible through the transparent plastic page. However, more on those issues later.

Continuing with a partial review of the theory of spatial transformations onto non-folded surfaces, any spatial transformation can be completely specified by giving its u and v component $f_u$ and $f_v$. These functions simply tell where to look in the source to find the primary intensities at a point in the target. Many spatial transformations are invertible and are given by:

$$(x,y) = f^{-1}(u,v)$$

$$x = f_x^{-1}(u,v) \tag{10}$$

$$y = f_y^{-1}(u,v)$$

These functions tell where in the target to move each source intensity. Since a transformation is the same for each primary color component we will drop the subscripts and write one representative equation for what is actually a group of three. We then have

$$t(x,y) = s(u,v) = s(f_u(x,y),f_v(x,y)) \tag{12}$$

If we are given a transformation in the form of equation (10) we must first invert $f^{-1}$ to get a relation of the form in equation (8) to be able to compute target points with equation (12).

The problem of two-dimensional spatial transformation is considerably simplified by the discovery that many transformations can be factored into a product of two one-dimensional transformations. The factorization is derived as follows. What we seek is an intermediate image r such that

$$t(x,y) = r(u,y) = s(u,v) \tag{13}$$

Computation of t could then proceed by a two stage process where the first stage is given by:

$$r(u,y) = s(u,g(u,y)) \tag{14}$$

and where the following second stage is given by:

$$t(x,y) = r(f_u(x,y),y) \tag{15}$$

with

$$g(u,y) = v$$

The image is produced from s by motion (repositioning) only in the second coordinate direction, since the first parameter in the equation relating the two is the same. Similarly r transforms into t by motion (repositioning) only in the first coordinate direction. To find g we have

$$r(u,y) = s(u,v) = s(u,f_{,v}(x,y))$$

and

$$f_u(x,y) = u$$

For every y we can define a one dimensional function

$$f_{uy}(x) = f_u(x,y) = u \tag{16}$$

If this function is invertible we may write

$$x = f_{uy}^{-1}(u)$$

and substitute this into $f_v$ to get

$$g(u,y) = v = f_v(x,y) = f_v(f_{uy}^{-1}(u),y) \tag{18}$$

Two important examples of spatial transformations are affine and projective. An affine transformation in two dimensions is given by

$$f_u(x,y) = a_{11}x + a_{12}y + a_{13}$$

$$\tag{20}$$

$$f_v(x,y) = a_{21}x + a_{22}y + a_{23}$$

and an affine transformation in three dimensions is given by

$$f_u (x,y,z) = a_{11}x + a_{12}y + a_{13}z + a_{14}$$

$$f_v (x,y,z) = a_{21}x + a_{22}y + a_{23}z + a_{24} \qquad (22)$$

$$f_w (x,y,z) = a_{31}x + a_{32}y + a_{33}z + a_{34}$$

and an affine transformation in N dimensions is given in general by

$$f_i(x) = \left[ \sum_{j=1}^{N} a_{ij} \ x_j \right] + a_{ij+1} \quad \text{where } x \in R^N \qquad (24)$$

It is known that affine transformations of dimension N are isomorphic to N+1 dimensional matrices of the form

$$\begin{bmatrix} a_{11} & a_{12} & \cdots & a_{1,N} & a_{1,N+1} \\ \Diamond & \Diamond & & \Diamond & \Diamond \\ \Diamond & \Diamond & & \Diamond & \Diamond \\ \Diamond & \Diamond & & \Diamond & \Diamond \\ (a_{N,1}) & (a_{N,2}) & \cdots & (a_{N,N}) & (a_{N,N+1}) \\ 0 & 0 & \cdots & 0 & 1 \end{bmatrix} \qquad (26)$$

Therefore the composite of two affine transformations can be calculated by taking the product of their respective matrices. Thus a general affine transformation can be built out of a product of simpler ones. Also the inverse of an affine transformation is found by inverting its matrix.

To use the matrix on an N-vector x, the vector is first mapped to an N+1-vector (x,1) by appending a one as its N+1th coordinate. The matrix M is then applied to this new vector forming an N+ 1th dimensional result. This is projected back to N space by dropping the N+1th coordinate which was undisturbed by the matrix M. As a two-dimensional example we have the transformation in equation (20). In matrix form this is the 3 x 3 array

$$M = \begin{bmatrix} a_{11} & a_{12} & a_{13} \\ a_{21} & a_{22} & a_{23} \\ 0 & 0 & 1 \end{bmatrix}$$

We map (x,y) to the three vector (x,y,l) and apply M

$$\begin{bmatrix} u \\ v \\ 1 \end{bmatrix} = \begin{bmatrix} a_{11} & a_{12} & a_{13} \\ a_{21} & a_{22} & a_{23} \\ 0 & 0 & 1 \end{bmatrix} \begin{bmatrix} x \\ y \\ 1 \end{bmatrix}$$

which can be rewritten as

$$u = a_{11}x + a_{12}y + a_{13}$$
$$v = a_{21}x + a_{22}y + a_{23}$$
$$1 = 1$$

Dropping the third equation, which is an identity, we are left with (u,v).

If M is invertible we may express (x,y) as a function of (u,v)

$$\begin{bmatrix} x \\ y \\ 1 \end{bmatrix} = M^{-1} \begin{bmatrix} u \\ v \\ 1 \end{bmatrix}$$

This is normally how transformations are specified. For calculation purposes though, we are given individual target coordinates (x,y) and must find what (u,v) in the source contributes intensity to that location.

Translation, scaling, rotation and shearing are all special cases of affine transformation. These four cases taken together can produce all possible affine mappings. The matrices and formulas for these are shown below for the two-dimensional case. The transformations are described verbally in the source to target direction and we first show the inverse of matrix M, which we label as $M^{-1}$, that corresponds to that description.

Translation of each source point (u,v) by a vector $(T_x, T_y)$ to a target point (x, y):

$$M^{-1} = \begin{bmatrix} 1 & 0 & T_x \\ 0 & 1 & T_y \\ 0 & 0 & 1 \end{bmatrix}$$

$$f_x^{-1}(u,v) = u + T_x$$
$$f_y^{-1}(u,v) = v + T_y$$

and a corresponding matrix yielding a source point as a function of target:

$$M = \begin{bmatrix} 1 & 0 & -T_x \\ 0 & 1 & -Ty \\ 0 & 0 & 1 \end{bmatrix}$$

$$f_u(x,y) = x - T_x$$
$$f_v(x,y) = y - T_y$$

Expansion by factors $S_x$ and $S_y$:

$$M^{-1} = \begin{bmatrix} S_x & 0 & 0 \\ 0 & S_y & 0 \\ 0 & 0 & 1 \end{bmatrix}$$

$$f_x^{-1}(u,v) = u\, S_x$$
$$f_y^{-1}(u,v) = v\, S_y$$

and

$$M = \begin{bmatrix} \dfrac{1}{S_x} & 0 & 0 \\[2mm] 0 & \dfrac{1}{S_y} & 0 \\[2mm] 0 & 0 & 1 \end{bmatrix}$$

$$f_u(x,y) = x/S_x$$
$$f_v(x,y) = y/S_y$$

Clockwise rotation by an angle Q:

$$M^{-1} = \begin{bmatrix} \cos Q & \sin Q & 0 \\ -\sin Q & \cos Q & 0 \\ 0 & 0 & 1 \end{bmatrix}$$

$$f_x^{-1}(u,v) = u \cos Q - v \sin Q$$
$$f_y^{-1}(u,v) = u \sin Q + v \cos Q$$

and

$$M = \begin{bmatrix} \cos Q & -\sin Q & 0 \\ \sin Q & \cos Q & 0 \\ 0 & 0 & 1 \end{bmatrix}$$

$$f_u(x,y) = x \cos Q - y \sin Q$$
$$f_v(x,y) = x \sin Q + y \cos Q$$

Right shear of x coordinate by an angle $\Omega$;

$$M^{-1} = \begin{bmatrix} 1 & \tan \Omega & 0 \\ 0 & 1 & 0 \\ 0 & 0 & 1 \end{bmatrix}$$

$$f_x^{-1}(u,v) = u + v \tan \Omega$$
$$f_y^{-1}(u,v) = v$$

and

$$M = \begin{bmatrix} 1 & -\tan \Omega & 0 \\ 0 & 1 & 0 \\ 0 & 0 & 1 \end{bmatrix}$$

$$f_u(x,y) = x - y \tan \Omega$$
$$f_v(x,y) = y$$

Note the simple relationship between each of these matrices and its inverse. If we are given a sequence of operations specified in the source to target direction and need the M corresponding to the composite target to source transform, we may find this M by inverting each matrix in the sequence and concatenating in the reverse order according to the formula

$$(AB)^{-1} = B^{-1}A^{-1}$$

instead of inverting the composite directly.

As an example, suppose we wish to rotate our source, then translate it. The $M^{-1}$ for this is the product

$$M^{-1} = \begin{bmatrix} 1 & 0 & T_x \\ 0 & 1 & T_y \\ 0 & 0 & 1 \end{bmatrix} \begin{bmatrix} \cos Q & \sin Q & 0 \\ -\sin Q & \cos Q & 0 \\ 0 & 0 & 1 \end{bmatrix}$$

or

$$M^{-1} = \begin{bmatrix} \cos Q & \sin Q & T_x \\ -\sin Q & \cos Q & T_y \\ 0 & 0 & 1 \end{bmatrix}$$

Then

$$M = \begin{bmatrix} \cos Q & -\sin Q & (-T_x\cos Q + T_y\sin Q) \\ \sin Q & \cos Q & (-T_x\sin Q + T_y\cos Q) \\ 0 & 0 & 1 \end{bmatrix}$$

by direct calculation using cofactors, since the determinate of $M^{-1}$ equals one, which can be written as det $M^{-1} = 1$.

This same result can be had by taking the reversed production of inverse

$$M = \begin{bmatrix} \cos Q & -\sin Q & 0 \\ \sin Q & \cos Q & 0 \\ 0 & 0 & 1 \end{bmatrix} \begin{bmatrix} 1 & 0 & -T_x \\ 0 & 1 & -T_y \\ 0 & 0 & 1 \end{bmatrix}$$

Three dimensional affine transforms behave analogously except that there are three matrices for rotations about X, Y and Z and three for shears along those axes. Projective transformations are given by the general form

$$f_i(x) = \frac{\sum\limits_{j=1}^{N} a_{i,j} x_j + a_{i,N+1}}{\sum\limits_{j=1}^{N} a_{N+1,j} x_j + a_{N+1,N+1}}$$

These transformations are isomorphic to the set of all N+1 dimensional square matrices. Affine transformations are thus special cases of projective ones.

The distortion of distance produced when a three-dimensional scene is projected onto a flat plane by a lens can be modeled by a projective transformation. In fact, analysis of that distortion, called perspective, is thought to be the impetus for the creation of projective geometry.

Perspective distortion is quite familiar to anyone involved in art, architecture, photography, drafting, computer graphics, etc. A two-dimensional perspective projection of a three-dimensional scene is produced by dividing X and Y coordinates of each point in the original by its Z value, where Z points in the direction of view of the lens.

Thus

$$X = \frac{X'}{Z'} ;$$

$(X',Y',Z')$ = coordinates of point in 3-D scene

$$Y = \frac{Y'}{Z'} ;$$

$(X;Y)$ = coordinates of image of point in 2-D view plane

This mapping collapses all points lying on a line passing through the focal point of the lens onto a single point in the view plane.

We can construct a two-dimensional projective transformation from a three-dimensional affine transformation. The transformation represents, or models, the image formed by a camera viewing a flat picture that has been rotated, sheared, scaled and translated to locations throughout three-dimensional space. We start with an image in the u,v plane and map the points in it to the three-dimensional-space coordinate (u,v,O) and apply an affine transformation of the form equation (22) to obtain an (x',y',z'). Dividing by Z' we have

$$x = \frac{a_{11}u + a_{12}v + a_{14}}{a_{31}u + a_{32}v + a_{34}} \quad (28)$$

and

$$y = \frac{a_{21}u + a_{22}v + a_{24}}{a_{31}u + a_{32}v + a_{34}} \quad (29)$$

The $a_{13}$, $a_{23}$ and $a_{33}$ terms are missing since w is zero in this case. Equations (28) and (29) are specifications for an $f_x^{-1}(u,v)$ and $f_y^{-1}(u,v)$. We want to invert and factor this transformation to obtain the $f_u(x,y)$ and $g(u,y)$ needed in equations (14) and (15). Since we are starting with inverses, the procedure for factorization is somewhat different from that described above. We first solve equation (29) for v to get $g(u,y)$ directly.

$$y = \frac{a_{22}v + (a_{21}u + a_{24})}{a_{32}v + (a_{31}u + a_{34})} \quad (30)$$

$$v = \frac{-(a_{31}u + a_{34})y + (a_{21}u + a_{24})}{a_{32}y - a_{22}} = g(u,y)$$

Substituting for v in equation (28) solving for u we have after some manipulation

$$u = \frac{(a_{22}a_{34} - a_{24}a_{32})x + (a_{14}a_{32} - a_{12}a_{34})y + (a_{12}a_{24} - a_{14}a_{22})}{(a_{21}a_{32} - a_{22}a_{31})x + (a_{12}a_{31} - a_{11}a_{32})y + (a_{11}a_{22} - a_{12}a_{21})} \quad (31)$$

If the terms $a_{31}$ and $a_{32}$ are zero and $a_{34}$ equals one, the projection reduces to an affine transformation within the plane and we have

$$x = a_{11}u + a_{12}v + a_{14}$$
$$y = a_{21}u + a_{22}v + a_{24}$$

$$v = g(u,x) = \frac{y + (a_{21}u + a_{24})}{-a_{22}} \quad (32)$$

$$u = f_u(x,y) = \frac{a_{22}x - a_{12}y + (a_{12}a_{24} - a_{14}a_{22})}{a_{11}a_{22} - a_{12}a_{21}} \quad (33)$$

A three-dimensional affine transformation from a source array having three-dimensional variables u, v and w to a target array having dimensional variables x, y and z would be defined by the generalized equation:

$$\begin{bmatrix} x \\ y \\ z \\ 1 \end{bmatrix} = \begin{bmatrix} a_{11} & a_{12} & a_{13} & a_{14} \\ a_{21} & a_{22} & a_{23} & a_{24} \\ a_{31} & a_{32} & a_{33} & a_{34} \\ 0 & 0 & 0 & 1 \end{bmatrix} \cdot \begin{bmatrix} u \\ v \\ w \\ 1 \end{bmatrix} \qquad (34)$$

which can be rewritten as three scalar equations:

$$x = a_{11}u + a_{12}v + a_{13}w + a_{14} \qquad (35)$$
$$y = a_{21}u + a_{22}v + a_{23}w + a_{24} \qquad (36)$$
$$z = a_{31}u + a_{32}v + a_{33}w + a_{34} \qquad (37)$$

Although the actual manipulations become quite extensive and are therefore hereafter omitted, it will be appreciated that equation (37) can be solved for u to produce

$$u = g_1(v,w,z) \qquad (38)$$

Determining u at each possible combination of values of v, w and z and using u as a source address to obtain data corresponding to each source address, a three-dimensional first intermediate array of data is established having the coordinates v, w and z. The target dimension z has now been substituted for the source dimension u.

Next, substituting equation (38) into equations (35) and (36) to eliminate u, the result is

$$x = g_2(v,w,z) \qquad (39)$$
$$y = g_3(v,w,z) \qquad (40)$$

Equation (40) can now be solved for v to obtain

$$v = h_1(w,y,z) \qquad (41)$$

Determining v for each possible combination of values of w, y and z and using the determined "$a_{i,j}$" values as array address locations to obtain data from the first intermediate v, w, z array, a second intermediate array of data is established having dimensions w, y and z and values at coordinate points thereof corresponding to the addressed locations in the first intermediate array.

The final target matrix of data having dimensions x, y and z is obtained by substituting equation (41) into equation (39) to eliminate v. The result is

$$x = h_2(w,y,z) \qquad (42)$$

Solving equation (42) for w we obtain

$$w = i_1(w,y,z) \qquad (43)$$

The values of w can be determined for all possible combinations of values x, y and z and used as source address locations within the second intermediate w, y, z array to obtain data from the second intermediate array and establish the three-dimensional target array T (x, y, z) as the values obtained from the second intermediate array at the locations defined by w, y and z for each possible combination of values x, y and z.

## (B) Some Theory of Spatial Transformation onto Folded Curved Surfaces

Up to now we have reviewed some of the theory of spatial transformations onto non-folded surfaces. As alluded to earlier, the theory of spatial transformations onto folded curved surfaces is more complex, partly because for each (x,y) there may be more than one (u,v) and hence there is the possibility of specifying more than one intensity for the same primary color component at the same point. This gives rise to a functional relation like equation (9). It also gives rise to the need for a methodology to determine which point or points out of a plurality of points should be selected.

The matrix algebra of mapping an image onto a folded curved surface is shortly to be described. Then equations resulting from two-pass transformation factoring are then described. The next two subjects describe a numerical basis for evaluating square roots and polynomials used in the address expressions.

## (B.1) Matrix Algebra for Folded Surface Mapping

Our first step is the creation of a folded surface model that approximates a curled paper. A hyperbolic sheet was found to have a nearly 'ruled' behavior, and provided realistic motion.

Our next step is to develop equations that describe the mapping of points in the source image to points in the target image.

The mapping sequence of a source pixel "src" to a target pixel "(xt, yt)" is described by use of two-dimensional and three-dimensional matrix operations. The three basic steps are: (1) in two-dimensional operations, introducing a prerotation, curl tightness, and stretch compensation; (2) mapping two-dimensional points to three-dimensional points; and (3) in three-dimensional operations, completing the compensation and introducing rotation; scaling, and translation to the transformed image.

In the mathematical notation that follows, without loss of generality, pixel source addresses are represented as row vectors, rather than as the column vectors employed in the notation thus far. Similarly, the matrix notation is the transpose of earlier notation in this disclosure.

$$(src.AFF2) = (x,y) \qquad \text{2-D AFFINE operations}$$
$$(x,y) \text{ becomes } (x, y, sqrt(A2*x*x +1) ) \qquad \text{2-D to 3-D object "obj"} \qquad (44)$$
$$(xt, yt) = obj.AFF \qquad \text{3-D AFFINE operations}$$

where * means multiply and where sqrt means the square root or radical of the argument and where:

$$\text{AFF2} = [ptl] [PTT] [Szoom] [Sstretch] \quad (45)$$
$$\text{AFF} = [Szoominv] [Rbeta] [PTTinv] [other] [ltp]$$

all of which is defined hereinafter.

The mapping onto a hyperbola requires only one parameter, A2, to be determined. Parameter A2 is specified as input control information. Determine A2 from the required "fold opening" angle theta :

$$A2 = [ \tan\{ (\pi - theta)/2 \} ]^2$$

For example: a 45 degree fold opening angle of theta means that

$$A2 = [ \tan \{(3.14159 - 0.785)/2\} ]^2 = 5.82$$

In addition, the matrices for use in equation (45) are:

$$ptl = \begin{bmatrix} t1 & 0 & 0 \\ 0 & t3 & 0 \\ t2 & t4 & 1 \end{bmatrix} \qquad (46)$$

/* physical to logical coordinate
transformation, employing
t1 through t4 */

$$PTT = \begin{bmatrix} ca & sa & 1 \\ -sa & ca & 0 \\ tx & ty & 1 \end{bmatrix} \qquad (47)$$

/* pre turn then translate */

where:

ca = cos (alpha)
sa = sin (alpha)
alpha is the fold direction and
tx and ty are the x and y components of the fold overlap distance.

$$Szoom = \begin{bmatrix} sz & 0 & 0 \\ 0 & 1 & 0 \\ 0 & 0 & 1 \end{bmatrix} \qquad (48)$$

/* controls tightness of curl */

The hyperbola asymptotic plane is z= sqrt(A2)*x. Far from the vertex, this causes a stretching of sqrt(1 + A2),

13

which must be compensated for. The stretch factor is:

$$ss = 1/sqrt(1 + A2)$$

whereas

$$Sstretch = \begin{bmatrix} ss & 0 & 0 \\ 0 & 1 & 0 \\ 0 & 0 & 1 \end{bmatrix} \tag{49}$$

/* compensate for hyperbola
local magnification */

After mapping, the operations become three-dimensional. Here we determine the y-axis rotation needed to place the positive-slope asymptotic plane horizontal. The rotation angle is positive and right handed.

$$cb = \cos\{(\pi - theta)/2\}$$
$$sb = \sin\{(\pi - theta)/2\} \tag{50}$$

$$Rbeta = \begin{bmatrix} cb & 0 & -sb & 0 \\ 0 & 1 & 0 & 0 \\ sb & 0 & cb & 0 \\ 0 & 0 & 0 & 1 \end{bmatrix} \tag{51}$$

/* this always "lays down" the
right hand side */

$$Szoominv = \begin{bmatrix} 1/sz & 0 & 0 & 0 \\ 0 & 1 & 0 & 0 \\ 0 & 0 & 1/sz & 0 \\ 0 & 0 & 0 & 1 \end{bmatrix} \tag{52}$$

$$PTTinv = \begin{bmatrix} ca & -sa & 0 & 0 \\ sa & ca & 0 & 0 \\ 0 & 0 & 1 & 0 \\ (-ca*tx - sa*ty) & (-ca*ty + sa*tx) & 0 & 1 \end{bmatrix} \tag{53}$$

$$\text{other} = \begin{bmatrix} ag & eg & ig & 0 \\ bg & fg & jg & 0 \\ cg & gg & kg & 0 \\ dg & hg & lg & 1 \end{bmatrix} \tag{54}$$

/* a general three-dimensional transform or affine, for example, the A matrix of equation (34) */

$$\text{ltp} = \begin{bmatrix} t5 & 0 & 0 & 0 \\ 0 & t7 & 0 & 0 \\ 0 & 0 & 1 & 0 \\ t6 & t8 & 0 & 1 \end{bmatrix} \tag{55}$$

/* logical to physical coordinate transformation employing t4 through t8 for scalling and offset. The coefficients t1 through t8 relate the user coordinate system to the physical hardware coordinate system */

The manipulation of the mapping equations is done with two goals:

first, the desire to have inverted expressions that give source locations in terms of known target locations, and

second, the desire to factor the equations in order to obtain a mapping of two cascaded one-dimensional mappings (note that this permits the separability of the two passes as mentioned earlier).

### (B.2) Folded Curve Two-Pass Spatial Transformation Equations

Although the actual manipulations are omitted because they become quite extensive, it will be appreciated by the skilled artworker that equation (44) with substitutions of equations (45) through (55) can be solved, for example, with the aid of a computer algebra system, to yield the source coordinates "src" in terms of the target coordinates "(xt, yt)".

The foregoing gives rise to five equations that are used in achieving a separable, two-pass image transformation on a folded curve surface to create a special page turn effect in accord with the principles of my invention. The coefficients for the following equations (56), (57) and (58) may be determined using the C language methodology recited in Appendix B to this patent. The five equations are:

(a) For the vertical-pass, or v-pass,
$$ys = f(xs, yt)$$
i.e. the y source address ys is a function of the x source address xs and the y target address yt. The form of the first equation is:
$$ys = VKO + VKl * xs + VK2 * yt ( +/- ) VK3 * \text{sqrt}( \text{arg\_v} ) \quad (56)$$
where * means multiply and where sqrt means the square root or radical and where (+/-) means that equation (56) is multivalued and has two evaluations, the first being where the right hand variable is added to the left hand variables and the second being where the right hand variable is subtracted from the left hand variables, and where
$$\text{arg\_v} = VK4 + VK5 * xs + VK6 * yt + VK7 * xs * yt + VK8 * xs * xs + VK9 * yt * yt$$
(b) For the horizontal-pass, or h-pass,
$$xs = g (xt, yt)$$

i.e. for a given target address xt and yt, function g (xt, yt) gives the x source address xs. The form of the second equation is:

$$xs = HKO + HK1 * xt + HK2 * yt ( + / - ) HK3 * sqrt( arg\_h) \quad (57)$$

where

$$arg\_h = HK4 + HK5 * xt + HK6 * yt + HK7 * xt * yt + HK8 * xt * xt + HK9 * yt * yt$$

(c) Qualifier for the h-pass,

$$ys = h (xt, yt)$$

i.e. the qualifier for equation (57) is that equation (57) is used only when the third equation (58) gives a value for ys that is a visible pixel, i.e. the pixel is not clipped. When equation (57) is not qualified, the h-pass interpolator 660 does background fill.

The physical significance of the third equation (58) is that it describes the top and bottom limits of a curled page. The form of the third equation (58) is:

$$ys = yHKO + yHKl * xt + yHK2 * yt ( + / - ) yHK3 * sqrt(arg\_h) \quad (58)$$

where arg_h is the same as in the second equation (57).

(d) Mask for the h-pass is the fourth equation

$$xmask = F(yt) \quad (59)$$

The physical significance of the fourth equation (59) is that it describes mask pixels while mask has or has not been exceeded. This fourth equation is the projected intersection of the two asymptotic planes of the hyperbolic sheet, for example, see intersection 930 of asymptotic planes 910 and 920 in FIG. 9.

(e) The fifth equation is actually a set of priority rules for the v-pass and h-pass. These rules also include the function of root tracking. The rules are recited in the C-language programming logic rules recited in Appendix A to this patent. As earlier mentioned, the equations (56), (57) and (58) are multivalued and require auxiliary conditions to determine the appropriate evaluation of the expressions. The rules of Appendix A recite an appropriate evaluation methodology for the expressions stated in the first four equations, i.e. equations (56), (57), (58) and (59).

For example, the fifth equation rules of Appendix A embody the v-pass root tracker as field static, while the h-pass root tracker changes at pixel rate. The qualifier root tracker is related to the h-pass root tracker. Further, the work done by the h-pass root tracker is in controlling the overlap of pixels, for example, because part of the planar source overlaps and obscures another part.

The stages of a later described illustrative embodiment reflect the above five equations, except those evaluations that change slowly are arranged to occur in the transform composer and factorizor 26, hardware being preferred for line-rate or pixel-rate computation.

On the one hand, it is apparent that h-pass first factoring is preferred for any page turn that pulls down from the top, or up from the bottom. This is due to the intermediate image suffering from clipping of pixel data that is subsequently required in the target image. On the other hand, it is also apparent that v-pass first factoring is preferred for any page turn that turns from either the left edge or the right edge of an image.

## (B.3) Square Root Evaluation

Equations (56), (57) and (58) require the evaluation of square roots at pixel rate. This can be done by a one iteration algorithm as follows:

(a) problem:

find sqrt(n) where $1 \leqq n < 4$

this is arranged by conversion to float

(b) define n = c + x

such that $x < 2^{-14}$ and

such that n, c, and x are to be in fractional notation so that by a Taylor's series

$$sqrt(n) = sqrt(c+x)$$

$$= sqrt(c) + x/(2*sqrt(c)) - (1/4)*c^{(-3/2)}*x^2 + smaller\ higher\ order\ terms$$

By neglecting terms beyond the linear, an error analysis of the foregoing Taylor series approximation gives rise to the following observations:

(i) c is n truncated to the 14 most significant bits

(ii) the sqrt(c) can be written into a read-only-memory table of $2^{14}$ entries of 24 bit precision, which gives rise to an error of $2^{-25}$

(iii) the $1/(2*sqrt(c))$ can be written into a read-only-memory table of $2^{14}$ entries of 12-bit precision, which gives rise to an error of $2^{-13}$

(iv) the error due to the linear term is $(2^{-13})*(2^{-14})$, or an error of $2^{-27}$. In view of the above, the error in sqrt(n) is approximately $2^{-26}$.

The need for this relatively high accuracy in the evaluation of square roots arises from the fact that the equations (56), (57) and (58) are somewhat poorly numerically conditioned. Reasonable results are obtained from the subtraction of two large values, one involving a square root, and the other a large simple term.

## (B.4) Polynomial Evaluation

Equations (56), (57) and (58) also have quadratic polynomials that must be evaluated for every pixel. If x is a variable that is incremented in integers, the expression $y = ax^2 + bx + c$ may be written as two cascaded digital differential accumulators:

$$rl = r1 + 2a$$
$$r2 = r2 + r1$$

with the initialize condition (when x= 0) of

$$rl = a + b$$
$$r2 = c$$

The output of rl feeds r2, and the output of r2 is y.

The error in the term 2a due to quantizing will be called eps2, and the error due to a+b will be called eps1. After n accumulations (i.e. x=n) the erro of the first stage is epsl + n*eps2. Similarly, the error at the output of r2 has a term eps3 due to the quantizing of c. The total error becomes

$$n * epsl + n * ((n - 1)/2) * eps2 + eps3$$

The error is dominated by the $n^2$ term; for n=720, eps2 must be approximately $2^{-22}$ to obtain an error of 1/16. The effect of this error on final source pixel location is most sensitive when the quadratic is near zero. An error of 1/16 becomes on the order of 1/32 after the square root operation. Thus the constants a, b, and c of the above quadratic are preferably accurate to about 22-bits. Furthermore, accumulation of 720 increments adds another 10 bits to th word size, requiring words in the order of 32-bit words. Accordingly, 32-bit accumulators are preferred.

## (C) Discussion of an Embodiment of a Real Time System for Image Transformation onto a Folded Curved Surface

An illustrative embodiment of a special effects system 600 that accepts separate digitized versions of the Y, I and Q components of a NTSC or PAL compatible image signal is shown in FIG. 6. One skilled in the art will readily recognize that modifications may easily be made which will accommodate an image signal that is compatible with recognized industry standards such as are described in CCIR 601 or ANSI RP125. Further, the key channel can be processed like a Y component of the industry standard image signal. The CH1 Y digital video component of a first channel video image is received by Y component processing system 50 of channel 1 array processor 670 of special effects system 600 as an input in raster scan television signal. Samples are arranged in an eight bit parallel, byte serial, data stream and enter and are stored in the first horizontal-to-vertical transposing memory 18 of Y processing system 50. Each of the I and Q component processing systems 60 and 70 may be implemented as duplicates of the component processor 50. The first horizontal-to-vertical transposing memory 18 contains three field memory modules, each large enough to hold one active field of data. Successively received fields of video data are stored sequentially in the three field memory modules, and during each input field time interval, the field memory module containing the oldest data is used as a buffer to store the current field of data being received while the previous two fields are read simultaneously from the other two field memory modules for processing. This arrangement prevents timing conflicts that occur when trying to write new data to a memory that still contains parts of a previously received field not yet processed. Only those data representing visible picture are stored, thus each memory contains 243 lines of 768 data samples. In addition to providing field storage, a main function of the transposing memory 18 is to permit a change in the direction of scan of the fields stored within it. Each field memory is written in horizontal order as shown in FIG. 2, but can be read in vertical order as 768 columns of 243 pixels as shown in FIG. 3. The memory, of course, provides addressable discrete memory locations for storing respective data samples. The memory locations can be considered to correspond to an orderly array of data samples arranged in orthogonal rows in which the horizontal rows may be considered lines and the vertical rows columns.

Reading out the data samples in columns that were written in in rows produces a digital data stream representing a vertically scanned version of the input data. The horizontal and vertical dimensions of the picture are interchanged by this means. What was the left to right direction in the original becomes top to bottom and what was top to bottom becomes left to right. The output data stream can be considered as a horizontal scan of the original image mirrored about its vertical center line and rotated 90 degrees counterclockwise about its Z axis as illustrated by reference to FIGs. 2, 3, 4 and 5. In this manner vertical processing of the input data can be achieved by operating on the output data with a device only capable of transformation along the direction of scan. Vertical processing of the original horizontally scanned signal is difficult because vertically adjacent samples are separated widely in time. After transposition, however, vertically adjacent samples are close together in time while horizontal ones are far apart.

Referring still to FIG. 6, two 70 ns luminance data streams representing the two fields previous to the current input field leave the transposing memory 18 to enter a vertical interpolation decimation filter 650 of the vertical transformation system 20. These two fields together contain information describing the entire spatial area occupied by the image, except that one field was scanned 1/60 second earlier than the other. Throughout the system, paralleling of data paths, memory modules and computational elements is used to prevent the data rate required on any single path from rising above $4f_{sc}$, while still retaining the enormous total rates required for real time processing. The machine is built with commonly available Schottky TTL logic devices which can comfortably respond to a 70 ns clock.

In the vertical transformation system 20, interpolation decimation filter 650 has a double line buffer, each side of which is long enough to contain a column. The filter can interpolate between two pixels to a resolution of 1/64 of a pixel and vary its pass frequency response on a point by point basis over a range appropriate for the smooth compression of a column.

Remaining with FIG. 6, the interpolation decimation filter 650 receives vertical lines of the source image. Even if the video data are read out horizontally from the horizontal-to-vertical transposing memory 18, the video data are still treated as a vertical scan. The net effect is a ninety degree (90°) rotation and mirror imaging which is compensated by the transform composer and factorizor 26.

It will be recalled that x and y are used to identify pixel locations within the target or output image while u and v are used to identify pixel locations within the source image. At the interpolation decimation filter 650, each vertical scan line corresponds to a constant u value with the u value being incremented for each sequential vertical scan line starting with zero and moving from left to right. For each vertical scan line the interpolation decimation filter 650 receives a sequence of v address inputs from the vertical source address generator 800 specifying a sequence of pixel addresses within a scan line for a sequence of video data pixels. The interpolation decimation filter 650 responds to each v address received by outputting a pixel of video data as a function of the pixels positioned about the v point in the vertical scan line. Thereafter, vertical-to-horizontal transposing memory 22 of FIG. 6 is like that of FIG. 1 while horizontal interpolation decimation filter 660 of horizontal transformation system 24 functions in a manner paralleling that of already described interpolation decimation filter 650.

Equation (30) defines v as a function of u and y and a number of constants from an "$a_{i,j}$" matrix, which defines the desired relationship between the target and source images. During each vertical retrace time between fields the transform composer and factorizor 26 calculates the required matrix constants in response to operator input commands and supplies them to the vertical address generator 800. The vertical address generator 800 itself generates the u and y terms by in effect starting at zero for the first pixel of the first scan line and incrementing y for each successive pixel and incrementing u for each successive vertical scan line.

Similarly, for the horizontal dimension the horizontal address generator 900 receives the appropriate "$a_{i,j}$" matrix constants from the transform composer and factorizor 26 and calculates the horizontal source addresses u for each horizontal scan line in accordance with equation (31) as a function of x and y. The x and y are, in effect, established by starting at 0,0 for the first pixel of each field and incrementing x for each pixel and incrementing y for each horizontal scan line.

While the vertical and horizontal addresses v and u could of course be generated from the equations therefor by microprocessors, it would be very difficult to accomplish this at the 70 ns pixel rate. The vertical source address generator 800 and the horizontal source address generator 900 are special purpose circuits for calculating the v and u equations (30) and (31) at the pixel rate.

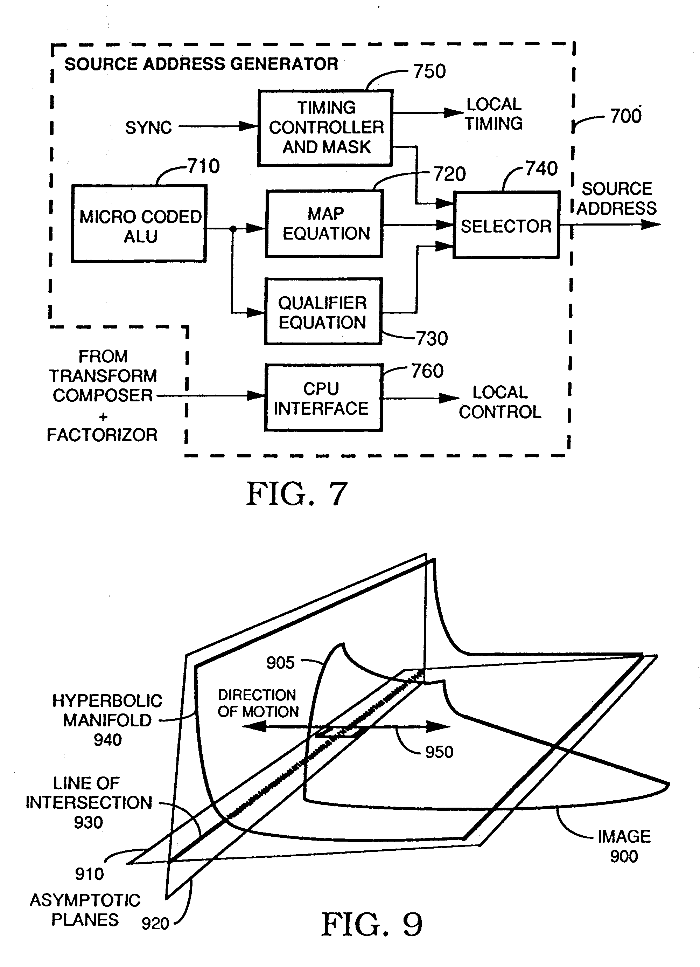

Referring to FIG. 7, a generic source address generator 700 for use as either vertical source address generator 800 or the horizontal source address generator 900 or both generators 800 and 900 in a special effects system 600 for transforming images onto tolded curved surfaces is broadly indicated. Generic source address generator 700 has a pipeline architecture which includes six stages 710, 720, 730, 740, 750, and 760 with a plurality of parallel and sequential operations. There are two versions of source address generator - one version functions as vertical source address generator 800 and the other version functions as horizontal source address generator 900. The vertical source address generator 800 generates the desired vertical source addresses for transforming a source image into an intermediate image using column-only operations. The horizontal source address generator 900, which is substantially identical to the vertical source address generator 800, generates the desired horizontal source addresses for transforming the intermediate image into a target image using row-only operations. To distinguish between the two versions of source address generator 700, they will hereinafter be identified as the v-pass address generator 800 or the h-pass address generator 900. Turning attention to source address generator 700 when it functions as v-pass address generator 800, the first stage cpu interface 760 receives from a host computer a set of numeric values and control commands for an image transformation to be applied in column order. The cpu interface 760 distributes these items to the remaining stages in synchronism with their rates of operation, after accommodating the asynchronous nature of the host computer. The second stage microcoded arithmetic logic unit (alu) 710 receives the aforementioned numeric values and performs computations in time synchronism with the image to be transformed. Due to the relatively slow rate of computation of the microcoded alu, a limited number of operations are performed. The results of this computation are presented to the third stage map equation 720. Third stage map equation 720 includes specialized circuits capable of sustained rates of computation sufficient to create the source address for column-only operations. In my embodiment, two candidate addresses can be created by the map equation stage 720. Both of these candidate addresses are outputted to the next fourth stage selector 740. The fourth stage selector 740 generates a third address and selects either one of the candidate addresses or, alternatively, the third address and outputs the selected address as the source address for the v-pass. Control of the selection process arises from inputs from a fifth stage qualifier equation 730. The qualifier equation stage 730 receives numeric values to be processed from the microcoded alu 710. It performs a computation that is synchronous with the field rate of the video signal. Additionally, control commands from the cpu interface 760 modify the behavior of the computation elements of the qualifier equation stage. The sixth timing controller and mask stage 750 generates numerous signals that control the sequencing of operation of the aforementioned stages in synchronism with the video signal.

Turning attention to source address generator 700 when it functions as h-pass address generator 900, the first stage cpu interface 760 receives from a host computer a set of numeric values and control commands for an image transformation to be applied in row order. It distributes these items to the remaining stages in synchronism with their rates of operation, after accommodating the asynchronous nature of the host computer. The second stage microcoded alu 710 receives the aforementioned numeric values and performs computations in time synchronism with the video. Due to the relatively slow rate of computation of the microcoded alu, a limited number of operations are performed. The results of this computation are presented to the third map equation stage 720. The third stage equation stage 720 includes specialized circuits capable of sustained rates of computation sufficient to create the source address for row-only operations. In my embodiment, two candidate addresses can be generated by the map equation stage 720. Both of these addresses are outputted to the fourth stage selector 740. The fourth stage selector 740 generates a third address and selects either one of the candidate addresses or, alternatively, the third address and outputs this selection as the source address for the h-pass. Control of the selection process arises from inputs from two other stages, the qualifier equation stage 730 and the timing controller and mask stage 750. The qualifier equation stage 730 receives numeric values to be processed from the microcoded alu 710. It performs a computation at the same rate of operation as the map equation stage 720, and presents numeric results to the selector stage 740 in parallel with the activities of the map equation stage 720. Additionally, control commands from the cpu interface 760 modify the behavior of the computation elements of the qualifier equation stage. The timing controller and mask stage 750 generates a mask signal that discriminates addresses of an undesired image that correspond to a mirror image of the desired image. Additionally, mask stage 750 generates numerous signals that control the sequencing of operation of the aforementioned h-pass stages in synchronism with the video signal.

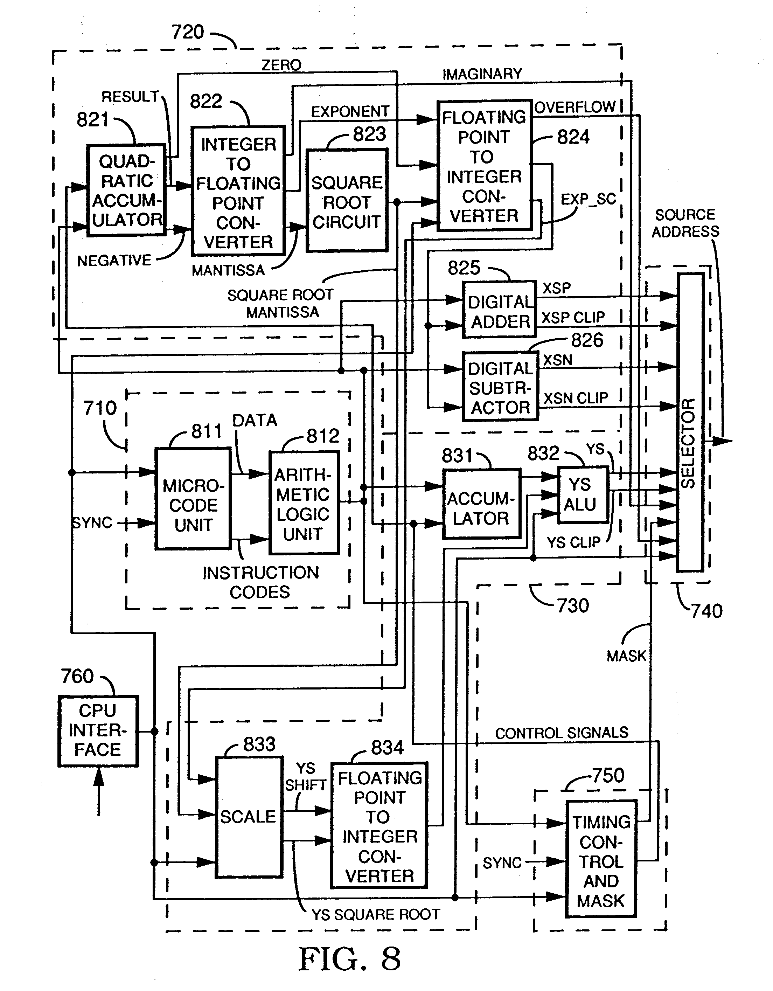

In conjunction with FIG. 8, a more detailed description of the six stages of source address generator 700 from FIG. 7 is now presented. The microcoded alu 710 is comprised of two elements, a microcode unit 811 and an arithmetic logic unit 812. The microcode unit 811 includes a counter and a read only memory such as a programmable read only memory (prom) that is programed with a sequence of instruction codes to implement the slowly changing numerical expressions of equations (56) and (57). For the v-pass address generator 800, the slowly changing expressions are those terms of equation (56) that have terms in xs. For the h-pass address generator 900, the slowly changing expressions are those terms of equation (57) that have terms in yt. The microcode unit 811 is operated synchronous with the video field and line scanning rates by means of reset controls applied to the counter. Further, microcode unit 811 includes means for the host computer to directly preempt the counter, providing for host computer access to the internal register set of arithmetic logic unit 812. Yet another feature of microcode unit 811 is its synchronous operation with pixel rates to function as an accumulator. In my illustrative embodiment, the arithmetic logic unit 812 is capable of 32-bit arithmetic. This is accomplished by the interconnection of two 16-bit units, with provision for carry and shift signals, as are used in the arithmetic operations of addition and division by powers of two.

The map equation stage 720 is comprised of elements 821-826. These elements operate as a pipe-line synchronous with the pixel rate. Element 821 is a quadratic accumulator. It includes two accumulators, a first accumulator in cascade with a second accumulator, where each is capable of accumulation on 32-bit integers. The accumulators are loaded with numeric values from microcoded alu 710 during the video line blanking intervals of column operation in the v-pass address generator 800, or correspondingly, during the line blanking intervals of rovw operation in the h-pass address generator 900. The numeric result is presented to an integer-to-floating point converter 822. Additionally, a signal representing the occurrence of a zero numeric value is generated for further use; a signal representing an imaginary numeric value from the square root circuit 823 is generated by recognizing negative numeric values from the output of the quadratic accumulator 821. Integer-to-floating point converter 822 uses a 32-bit shifter configured as a normalizer to convert an integer representation to a mantissa and exponent representation of a numeric value. This is performed to range reduce the numeric values presented to the square root circuit 823. The exponent is arranged to be an even integer number by introduction of a second 32-bit shifter, capable of an additional one bit shift in the event the exponent is an odd number.

The input to the square root circuit 823 is the aforementioned range reduced mantissa that is integer divided by 4096 and acts as an index to a lookup table implemented in read only memory. An output of the look-up table is an approximation to the square root of the mantissa of element 822. An additive correction is applied to this approximation, which is formed by the multiplicative product of a correction coefficient and the mantissa modulo 4096. The correction coefficient itself is a function of the mantissa as implemented by an additional look up table. The result of the square root circuit 823 is the mantissa component of a floating point value. Element 824 is a floating point-to-integer converter. It receives the square root mantissa and exponent from elements 823 and 822 respectively. The exponent is right shifted by one bit to perform the square root operation on the exponent and is applied to an eight-bit adder within floating point-to-integer converter 824. Another input to the adder of element 824 is a numeric value from the host computer to allow block floating point scaling. An output of the adder of element 824 is passed to a look-up table to control overflow and underflow errors. This is in turn applied as a shift control to a 32-bit shifter. For use by the scale unit 833, this numeric value is output and is labeled here as exp_sc. The result from square root circuit 823 is also applied to the same 32-bit shifter to convert the numeric representation to integer format. Element 824 receives a zero signal and handles this as a special case. The result of the square root circuit 823 is invalid when the numeric value zero is processed. Element 824 corrects this invalid value by reinsertion of a zero value in the pipeline. A further function of element 824 is the detection of non-representable numeric values, resulting from overflow. This is handled by the creation of an overflow signal which is processed by the selector 740.

The digital adder 825 receives the result from floating point-to-integer converter 824 and adds this numeric value to a value received from the microcoded alu 710 when it is operating as an accumulator. Simultaneously, digital subtracter 826 receives the same 2 operands, however it performs a subtraction of the 2 numeric values. The numeric values from adder 825 and subtractor 826 constitute the two candidate source addresses, which are labeled as xsp and xsn respectively. Additionally, the two candidate addresses are compared against bounding values that correspond to image address locations outside the defining boundaries of the source image. This is a two stage process, involving a coarse and fine comparison. Here the coarse comparison allows the representation of the candidate addresses in bit-field widths smaller than the 32-bit field width employed in the creation of the candidate addresses. In the event that numeric values occur that exceed the range representable by a 16-bit field, a clip signal is asserted. The fine comparisons are described in the disclosure of the selector 740.

Qualifier equation stage 730 is comprised of elements 831-834. In my illustrative embodiment the qualifier stage 730 is used in the h-pass, as the choice of candidate addresses is simplified in the v-pass address generator 800. More discussion about the v-pass is provided later. The scale element 833 includes a 16-bit digital multiplier with a full-vwidth 32-bit result. One operand of the multiplier includes a field constant computed by the host computer, corresponding to the ratio of the radical coefficients of equations (57) and (58). The second operand of the multiplier is the square root mantissa developed by square root circuit 823. A 28-bit result from the multiplier is obtained, and is labeled the ys_square_root. It should be understood that the numeric format of the value represented by the multiplier result is also a mantissa field. Thus an additional exponent is provided by the host computer, corresponding to the ratio of the radical coefficients of equations (57) and (58). This exponent is added by an adder within scale element 833 to the exp_sc exponent from element 824. A look-up table prevents overflow and underflow errors, the result is labeled the ys_shift. The floating point-to-integer converter 834 receives the ys_square_root as a mantissa, and receives ys_shift as an exponent. These are applied to a 32-bit shifter to convert the numeric representation to integer format.

Accumulator 831 implements a 32-bit digital accumulator. Numeric values for initialize and increment value are computed by the microcoded alu 710 and presented to the accumulator during the blanking intervals of column operation for the v-pass, or during the blanking intervals of row operation for the h-pass. During the non-blanking intervals the accumulator increments at a pixel rate and presents numeric values to the ys alu 832. The ys alu 832 is an arithmetic logic unit that the host computer may instruct to perform digital addition or subtraction. The two operands are the result of accumulator 831 and the result of floating point-to-integer converter 834. The result is a numeric value that is labeled ys. Similar to elements 825 and 826 a coarse comparison is performed and a clip signal may be asserted to indicate that ys exceeds the range representable by a 16-bit field.

The timing control and mask stage 750 includes synchronous counters and read only memories that decode counter states to produce control signals; these enable the transfer of numeric data amongst the various aforementioned stages, and the orderly start-up and termination of consecutive strings of addresses.

An additional function of 750 is the providing of a mask to reject a set of addresses that are a mirror image of the desired transformation. This circuit is only active in the h-pass address generator 900. Recall that the illustrative embodiment maps an image onto a hyperbolic manifold. These manifold have two loci or surfaces, only one of which, at a time, is suitable for the transformation. The other surface is removed by finding a plane that cuts away the unwanted surface. This plane passes through the intersection of the asymptotic planes, as may be deduced from FIG. 9. As the transformation equations in the theory correspond to orthogonal mapping the projection of this cutting plane may simply be the projection of the asymptotic plane intersection; therefore an evaluation of a linear equation is required. This is labeled the mask equation.

The microcoded alu 710 evaluates the aforementioned mask equation during the blanking interval of the h-pass; for each row of the image a determination of the position of the mask is made. This position is the location of the mask in pixel counts and is presented as a load preset to a digital counter configured to count toward zero. At zero count, a flip-flop is set as a mask for the remaining pixels of that row, said flip-flop having been cleared at the start of each row.

Selector 740 consists of three programmable window comparators; these elements are the final part of the two stage process disclosed in describing digital adder 825. They perform fine comparisons of the candidate addresses xsp, xsn, and the result ys from the qualifier equation 730 against lower and upper bounds defining the extent of the source image. They are programmable by the host computer to adjust the size of the folded portions of a transformed image. An experienced practitioner will recognize that non-folded portions may be handled by cropping of the source image directly.

An additional function of selector 740 is as a fold priority logic. On the basis of non-clipped validity of candidate source addresses xsp, and xsn, and the order of traversal of pixels, and the non-clipped validity of ys, a judgement, or conclusion, may be made as to suitability of xsp or xsn as the source address. Information on the order of traversal of pixels is deduced from examination of the geometry of the transformed object. For example, with a transformed image which displays a fold with an opening facing to the right, it will be apparent that xsn shall be given priority over xsp, provided ys is non-clipped; in lieu of this relation xsp shall prevail, and finally, when xsp is clipped, the third source address shall prevail. The third address is a tag that indicates that the target image contains no source image pixels at that location. An illustrative embodiment will recognize this tag and replace it with some other image, or a solid color background.

As the transformation equations for the h-pass represent the inverted map in closed form, the confounding nature of the multi-valued equations requires careful consideration. Accordingly an algorithm for generating the fold priority logic is disclosed in Appendix A. The fold priority logic in the illustrative embodiment is a read only memory that receives the multiplicity of inputs from clip signals, mask signal, imaginary square root signal, and host computer geometry determinations. The results from the read only memory control a simple selector process that chooses xsp, xsn, or the tag address.

Here we return to earlier remarks about the simple nature of the choice of candidate address in the v-pass address generator 800. The v-pass equation is found to contain only one multi-valued expression. The selection of candidate address is determinable by examination of the forward mapping equation and the selection of candidate address is made which agrees with the forward map. As no folds occur in the v-pass output image, the choice of xsn, or xsp is unchanging during the transformation of any particular image.

It will be understood by one experienced in the art that the numerous data registers required to maintain a synchronous pipeline at the high operation rates employed is straightforward upon an understanding of the principles of my invention and the foregoing detailed description and are not necessary in understanding either those principles or an embodiment of those principles.

# APPENDIX A

# START OF APPENDIX A

```c
#include <stdio.h>

#define PROM_SIZ        2048

/* input states to the read-only-memory */
#define H_PASS          0
#define V_PASS          1
#define OBTUSE_POS      0
#define OBTUSE_NEG      1
#define OPEN_RIGHT      2
#define OPEN_LEFT       3
#define POS_ROOT        0
#define NEG_ROOT        1


/* output states */
/* nibbles are ordered: front:back */
#define HI_Z            0xff
#define BLANK           0xdd
#define SEL_POS         0xe
#define SEL_NEG         0xb
#define FRONT_BLANK        0xd0
#define BACK_BLANK  0xd

main() {
        int pol_mask, i, j, out[PROM_SIZ];
        int ysp, ysn;
        int imag, mask, v_h, enable, overflow,
                surface_type, xsp, ys, xsn, single_channel;
        FILE *fp;
```

```
fp= fopen( "1443862_C0.prm", "w" );

pol_mask= 0x388;   /* coarse overflows assert low */

for (j= 0; j < PROM_SIZ; j++) {
        i= j ^ pol_mask;
        out[j]= HI_Z;
        /* strip out the control bits */
        imag= i & 1;
        mask= (i>>1) & 1;
        v_h= (i>>2) & 1;
        enable= (i>>3) & 1;
        overflow= (i>>4) & 1;
        surface_type= (i>>5) & 3;
        xsp= (i>>7) & 1;
        ys= (i>>8) & 1;
        xsn= (i>>9) & 1;
        single_channel= (i>>10) & 1;

        /* aliases for v-pass case */
        ysp= xsp;
        ysn= xsn;

        if (!enable) {
                out[j]= HI_Z;
                continue;
                }
        if (imag) {
                out[j]= BLANK;
                continue;
                }
        if (mask & (v_h == H_PASS) ) {
                out[j]= BLANK;
                continue;
```

```
                }
        if (overflow) {        /* used for blank by dual-channel OBTUSE */
                out[j]= BLANK;
                continue;
                }


        if (v_h == V_PASS) {
                switch ( surface_type ) {
                        case POS_ROOT:
                                if ( ysp ) out[j]= (SEL_POS<<4) | SEL_POS;
                                else out[j]= BLANK;
                                continue;
                        case NEG_ROOT:
                                if ( ysn ) out[j]= (SEL_NEG<<4) | SEL_NEG;
                                else out[j]= BLANK;
                                continue;
                        default:
                                out[j]= BLANK;
                                continue;
                        }
                }



        if (v_h == H_PASS) {
                switch ( surface_type ) {
                        case OBTUSE_POS:
                                if ( xsp & ys ) {
                                   out[j]= (SEL_POS<<4) | SEL_POS;
                                   if (single_channel) out[j]&= 0x77;
                                        }
                                else out[j]= BLANK;
                                continue;
                        case OBTUSE_NEG:
                                if ( xsn & ys ) {
                                        out[j]= (SEL_NEG<<4) | SEL_NEG;
```

24

```
          if (single_channel) out[j]&= 0x77;
            }
          else out[j]= BLANK;
          continue;
     case OPEN_RIGHT:
       if( single_channel ) {
          if ( xsn & ys )
            /* here doing backside;
            indicate back side for
            single channel with 0x77 which
            sets the BACK L bit
            */
            out[j]= ((SEL_NEG<<4)|SEL_NEG) & 0x77;
          else if ( xsp )
            /* now doing frontside */
            out[j]= (SEL_POS<<4)|SEL_POS;
          else out[j]= BLANK;
            }
       else { /* dual channel */
          if ( xsp && !(xsn && ys) )
            /* front channel active, back channel blanks

            out[j]= (SEL_POS<<4)|BACK_BLANK;
          else if ( !xsp && xsn && ys )
            /* back channel active, front channel blanks

            out[j]= FRONT_BLANK|SEL_NEG;
          else if ( xsp && xsn && ys )
            /* both channels active */
            out[j]= (SEL_POS<<4)|SEL_NEG;
          else out[j]= BLANK;
            }
          continue;
     case OPEN_LEFT:
       if( single_channel ) {
```

```
            if ( xsp & ys )
              /* backside */
              out[j]= ((SEL_POS<<4) | SEL_POS) & 0x77;
            else if ( xsn )
              /* frontside */
              out[j]= (SEL_NEG<<4) | SEL_NEG;
            else out[j]= BLANK;
            }
          else { /* dual channel */
            if ( xsn && !(xsp && ys) )
              /* front channel active, back channel blanks

*/

              out[j]= (SEL_NEG<<4) | BACK_BLANK;
            else if ( !xsn && xsp && ys )
              /* back channel active, front channel blanks

*/

              out[j]= FRONT_BLANK | SEL_POS;
            else if ( xsn && xsp && ys )
              /* both active */
              out[j]= (SEL_NEG<<4) | SEL_POS;
            else out[j]= BLANK;
            }
          continue;
          }
        }

    else fprintf ( stderr, "can't find this case: j= %d\n", j );

    }       /* end of table generation */

    for ( j= 0; j < PROM_SIZ; j++ )
        fprintf( fp, "%d\n", out[j] );

}
```

<div align="center">

## END OF APPENDIX A

</div>

# APPENDIX B

The algorithm of Appendix B is written in C language to compute the coefficients of equations of (56), (57), and (58). The C language notation -> is indicative of the operation "pointer to." For example: pg–>ag refers to a data structure containing an instance of matrix element ag of equation (54). The notation minv( ) is a matrix inversion routine. For example, see: Gerald & Wheatley, <u>Applied Numerical Analysis</u>, Addison/Wesley 1984, pp. 144, 145.

# START OF APPENDIX B

```
# define EPS  1 e-7
# define RANK     4
void    get_inverse_AFF();
void  get_inverse_AFF2();
void   minv();

/* compute AFFa..   etc. in physical coordinates */
AFFa=
ca*cb*pg - >ag*pc ->t5/pg ->sz   -   sa*cb*pg ->bg*pc - >t5/pg - >sz
  -sb*pg - >cg*pc ->t5/pg ->sz;

AFFb=
 ca*pg - >bg*pc ->t5  + sa*pg ->ag*pc ->t5;

AFFc=
ca*sb*pg ->ag*pc ->t5/pg->sz  -  sa*sb*pg ->bg*pc->t5/pg->sz
+ cb*pg ->cg*pc - >t5/pg ->sz;

AFFd=
pc->t6  - ca*pg->tx*pg - >ag*pc ->t5 - ca*pg-> ty*pg - >bg*pc ->t5   .
+ sa*pg - >tx*pg -> bg*pc ->t5
- sa*pg -> ty*pg ->ag*pc ->t5 + pg ->dg*pc ->t5;

AFFe=
ca*cb*pg ->eg*pc ->t7/pg ->sz - sa*cb*pg ->fg*pc -> t7/pg->sz
- sb*pg ->gg*pc ->t7/pg->sz;

AFFf=
ca*pg ->fg*pc - >t7 + sa*pg->eg*pc ->t7;

AFFg=
```

```
ca*sb*pg ->eg*pc ->t7/pg ->sz  -  sa*sb*pg ->fg*pc ->t7/pg - > sz
+ cb*pg ->gg*pc ->t7/pg->sz;

AFFh=
pc->t8 - ca*pg ->tx*pg ->eg*pc ->t7 - ca*pg - >ty*pg ->fg*pc ->t7
+ sa*pg->tx*pg ->fg*pc ->t7 - sa*pg - > ty*pg ->eg*pc ->t7 + pg ->hg*pc->t7;

AFFi=
ca*cb*pg->ig/pg->sz  -  sa*cb*pg -> jg/pg ->sz  -  sb*pg ->kg/pg ->sz;

AFFj= ca*pg->jg  + sa*pg ->ig;

AFFk=
ca*sb*pg->ig/pg->sz - sa*sb*pg ->jg/pg ->sz + cb*pg ->kg/pg ->sz;

AFFl
pg->lg - ca*pg ->tx*pg ->ig - ca*pg ->ty*pg ->jg
+sa*pg ->tx*pg ->jg - sa*pg ->ty*pg ->ig;

/* test for invalid solution as early as possible;
i.e. the equation to be solved might be a degenerate quadratic.
*/
tst2 = fabs (-2.0 *A2 *AFFg*AFFg *AFF2b *AFF2b
        +2.0 *(AFFe *AFF2b +AFFf *AFF2e)  *(AFFe *AFF2b + AFFf
*AFF2e) );
if ( tst2 <EPS) {
        err_numb = 5;
        return;
        }
get_inverse_AFF();


r[0] = AFFe*AFF2b + AFFf*AFF2e;

/* fix-up;  VQ must be available for r[1] */
r[54] =  -2*A2*AFFg*AFFg*AFF2b*AFF2b + 2*r [0] *r[0];

VQ= 1/r[54];   /* tst2 prevents a divide error */

r[1]= -2*AFFe*AFF2c*VQ  - 2*AFFf*AFF2f*VQ  - 2*AFFh*VQ;

r[2]= AFFe*AFF2b + AFFf*AFF2e;

r[3]= -2*AFFe*AFF2a*VQ  -2*AFFf*AFF2d*VQ;
```

r[4]= AFFe*AFF2b + AFFf*AFF2e;

r[5]= AFFe*AFF2b + AFFf*AFF2e;

r[6]= AFFh + AFFe*AFF2c + AFFf*AFF2f;

r[7]= 2*AFFh + 2*AFFe*AFF2c + 2*AFFf*AFF2f;

r[8]= AFFe*AFF2b + AFFf*AFF2e;

r[9]= 4*AFFe*AFF2a + 4*AFFf*AFF2d;

r[10]= AFFe*AFF2b + AFFf*AFF2e;

r[11]= 2*AFFh + 2*AFFe*AFF2c + 2*AFFf*AFF2f;

r[12]= AFFe*AFF2b + AFFf*AFF2e;

r[13]= AFFe*AFF2b + AFFf*AFF2e;

r[14]= AFFh + AFFe*AFF2c +AFFf*AFF2f;

r[15]= -8*AFFe*AFF2a - 8*AFFf*AFF2d;

r[16]= 4*AFFh + 4*AFFe*AFF2c + 4AFFf*AFF2f;

r[17]= AFFe*AFF2b + AFFf*AFF2e;

r[18]= -2*AFFe*AFF2b - 2*AFFf*AFF2e;

r[19]= AFFe*AFF2b + AFFf*AFF2e

r[20]= 8*AFFh + 8*AFFe*AFF2c +8*AFFf*AFF2f;

r[21]= 4*AFFe*AFF2a + 4*AFFf*AFF2d;

r[22]= AFFe*AFF2b + AFFf*AFF2e;

r[23]= -2*AFFe*AFF2b - 2AFFf*AFF2e;

r[24]= AFFe*AFF2b + AFFf*AFF2e;

r[25]= 8*AFFe*AFF2a + 8*AFFf*AFF2d;

r[26]= AFFe*AFF2b + AFFf*AFF2e;

```
r[27]= AFFe*AFF2a  +  AFFf*AFF2d;

r[28]= 2*AFFe*AFF2a  +  2*AFFf*AFF2d;

r[29]= AFFe*AFF2b  +  AFFf*AFF2e;

r[30]= -2*AFFe*AFF2b  -  2*AFFf*AFF2e;

r[31]= AFFe*AFF2b  +  AFFf*AFF2e;

r[32]= -2*INVAFFc*INVAFFc*A2  +  2*INVAFFk*INVAFFk;

/* again test for invalid solution; i.e. the equation to be solved might be a
degenerate quadratic.
*/
tst3= fabs( r[32] );
if ( tst3<EPS) {
        err_numb=4;
        return;
        }

get_inverse_AFF2();

r[33]= 4  +  4*INVAFFd*INVAFFd*A2  -  4*INVAFFl*INVAFFl;

r[34]= -INVAFFc*INVAFFc*A2  +  INVAFFk*  INVAFFk;

r[35]= -2*INVAFFc*INVAFFd*A2  +2*INVAFFk*INVAFFl;

r[36]= -4*INVAFFc*INVAFFd*A2  +  4*INVAFFk*INVAFFl;

r[37]= -2*INVAFFa*INVAFFc*A2  +  2*INVAFFi*INVAFFk;

r[38]= -INVAFFc*INVAFFc*A2  +  INVAFFk*  INVAFFk;

r[39]= 8*INVAFFa*INVAFFd*A2  -  8*INVAFFi*INVAFFl;

r[40]= -4*INVAFFc*INVAFFd*A2  +  4*INVAFFk*INVAFFl;

r[41]= -2*INVAFFb*INVAFFc*A2  +  2*INVAFFj*INVAFFk;

r[42]= -INVAFFc*INVAFFc*A2  +  INVAFFk*  INVAFFk;

r[43]= 8*INVAFFb*INVAFFd*A2  -  8*INVAFFj*INVAFFl;
```

r[44]= -4*INVAFFb*INVAFFc*A2 + 4*INVAFFj*INVAFFk;

r[45]= -2*INVAFFa*INVAFFc*A2 + 2*INVAFFi*INVAFFk;

r[46]= -INVAFFc*INVAFFc*A2 + INVAFFk* INVAFFk;

r[47]= 8*INVAFFa*INVAFFb*A2 - 8*INVAFFi*INVAFFj;

r[48]= -INVAFFc*INVAFFc*A2/2.0 + INVAFFk* INVAFFk/2.0;

r[49]= 8*INVAFFa*INVAFFa*A2 - 8*INVAFFi*INVAFFi;

r[50]= -2*INVAFFa*INVAFFc*A2 + 2*INVAFFi*INVAFFk;

r[51]= -INVAFFc*INVAFFc*A2/2.0 + INVAFFk* INVAFFk/2.0;

r[52]= 8*INVAFFb*INVAFFb*A2 - 8*INVAFFj*INVAFFj,

r[53]= -2*INVAFFb*INVAFFc*A2 + 2*INVAFFj*INVAFFk;

r[55]= -A2*AFFg*AFFg*AFF2b*AFF2b + r[5]* r[5];

r[56]= 4*A2*AFFg*AFFg*AFF2c*AFF2c + 4*AFFg*AFFg - 4 r[6]*r[6];

r[57]= -2*A2*AFFg*AFFg*AFF2b*AFF2c +r[7]*r[8];

r[58]= -4*A2*AFFg*AFFg*AFF2a*AFF2b + r[9]*r[10];

r[59]= -2*A2*AFFg*AFFg*AFF2b*AFF2c + r[11]*r[12];

r[60]= -A2*AFFg*AFFg*AFF2b*AFF2b + r[13]*r[13];

r[61]= 8*A2*AFFg*AFFg*AFF2a*AFF2c + r[14]*r[15];

r[62]= -4*A2*AFFg*AFFg*AFF2b*AFF2c + r[16]*r[17];

r[63]= -A2*AFFg*AFFg*AFF2b*AFF2b + r[19]*r[19];

r[64]= -4*A2*AFFg*AFFg*AFF2a*AFF2b + r[21]*r[22];

r[65]= -A2*AFFg*AFFg*AFF2b*AFF2b + r [24]*r[24];

r[66]= -A2*AFFg*AFFg*AFF2b*AFF2b/2.0 + r[26]*r[26] /2.0;

```
r[67]=  8*A2*AFFg*AFFg*AFF2a*AFF2a  -  8*r[27]*r[27] ;


r[68]= -2*A2*AFFg*AFFg*AFF2a*AFF2b +  r[28]*r[29];



If (fabs(AFFg) <EPS)  {/* degenerate v-pass*/
        if(fabs(r[4]) < EPS) {
                err_numb=Oxd;  /*degenerate, probably to a line */

                return;
                }



        pf->VKO= -r[14]/r[4];
        pf->VK1= -r[27]/r[4];
        pf->VK2 = 1./r[4];
        pf->VK3=0.;
        pf->VK4=pf->VK5=pf->VK6=pf->VK7=PF->VK8=pf->VK9=0.;
        }
else    {
        pf-> VK0=2*A2*AFFg*AFFg*AFF2b*AFF2c*VQ  +  r[1]*r[2];
        pf-> VK1=2*A2*AFFg*AFFg*AFF2a*AFF2b*VQ  +  r[3]*r[4];
        pf-> VK2=2*AFFe*AFF2b*VQ  +  2*AFFf*AFF2e*VQ;
        pf-> VK3=VQ;
        pf-> VK4= r[55]*r[56] + r[57]*r[57];
        pf-> VK5= r[58]*r[59] + r[60]*r[61];
        pf-> VK6= r[62]*r[18] + r[63]*r[20];
        pf-> VK7= r[64]*r[23] + r[65]*r[25];
        pf-> VK8= r[66]*r[67] + r[68]*r[68];
        pf->  VK9=  4*A2*AFFg*AFFg*AFF2b*AF2b +r[30]* r[30]
                        -4*r[31]*r[31];

        }
HQ=1/r[32];


pf->HK0=
INVAFF2c + 2*HQ*INVAFFc*INVAFFg*INVAFFd*INVAFF2b*A2
-2*HQ*INVAFFc*INVAFFk*INVAFFl*INVAFF2a
-2*HQ*INVAFFg*INVAFFk*INVAFFl*INVAFF2b
+2*HQ*INVAFFc*INVAFFc*INVAFFd*INVAFF2a*A2
+INVAFFd*INVAFF2a  +  INVAFFh*INVAFF2b;


pf->HK1=
2*HQ*INVAFFa*INVAFFc*INVAFFg*INVAFF2b*A2
+2*HQ*INVAFFa*INVAFFc*INVAFFc*INVAFF2a*A2
-2*HQ*INVAFFi*INVAFFg*INVAFFk*INVAFF2b
```

```
-2*HQ*INVAFFi*INVAFFc*INVAFFk*INVAFF2a
+INVAFFa*INVAFF2a   +   INVAFFe*INVAFF2b;


pf->HK2=
2*HQ*INVAFFb*INVAFFc*INVAFFg*INVAFF2b*A2
+2*HQ*INVAFFb*INVAFFc*INVAFFc*INVAFF2a*A2
-2*HQ*INVAFFj*INVAFFc*INVAFFk*INVAFF2a
-2*HQ*INVAFFj*INVAFFg*INVAFFk*INVAFF2b
+INVAFFb*INVAFF2a   +   INVAFFf*INVAFF2b;


pf->HK3=
HQ*INVAFFc*INVAFF2a  +  HQ*INVAFFg*INVAFF2b;
if (fabs (pf->HK3) < EPS) {
err_numb=8;
return;
}
pf->HK4= r[33]*r[34]  + r[35]*r[35];
pf->HK5= r[36]*r[37]  + r[38]*r[39];
pf->HK6= r[40]*r[41]  + r[42]*r[43];
pf->HK7= r[44]*r[45]  + r[46]*r[47];
pf->HK8= r[48]*r[49]  + r[50]*r[50];
pf->HK9= r[51]*r[52]  + r[53]*r[53];


yHQ=HQ;


pf->yHK0=
INVAFF2f  +2*yHQ*INVAFFc*INVAFFg*INVAFFd*INVAFF2e*A2
-2*yHQ*INVAFFc*INVAFFk*INVAFFl*INVAFF2d
-2*yHQ*INVAFFg*INVAFFk*INVAFFl*INVAFF2e
+2*yHQ*INVAFFc*INVAFFc*INVAFFd*INVAFF2d*A2
+INVAFFd*INVAFF2d   +   INVAFFh*INVAFF2e;


pf->yHK1=
2*yHQ*INVAFFa*INVAFFc*INVAFFg*INVAFF2e*A2
+2*yHQ*INVAFFa*INVAFFc*INVAFFc*INVAFF2d*A2
-2*yHQ*INVAFFi*INVAFFc*INVAFFk*INVAFF2d
-2*yHQ*INVAFFi*INVAFFg*INVAFFk*INVAFF2e
+INVAFFa*INVAFF2d   +   INVAFFe*INVAFF2e;


pf->yHK2=
2*yHQ*INVAFFb*INVAFFc*INVAFFg*INVAFF2e*A2
+2*yHQ*INVAFFb*INVAFFc*INVAFFc*INVAFF2d*A2
-2*yHQ*INVAFFj*INVAFFc*INVAFFk*INVAFF2d
-2*yHQ*INVAFFj*INVAFFg*INVAFFk*INVAFF2e
+INVAFFb*INVAFF2d   +   INVAFFf*INVAFF2e;
```

```
pf>yHK3=  yHQ*INVAFFc*INVAFF2d  +  yHQ*INVAFFg*INVAFF2e;

void  get_inverse_AFF()
        /* compute the matrix inverse of a 4 by 4
        to use as standard routine, the doubles are moved to
        an indexed array.
        */
        {

        int  i;
        int  n;
        double *b[RANK];

        if (err_numb !=0) return;
        n=4;

        /* build the matrix */
        a[0] [0] = AFFa;
        a[1] [0] = AFFb;
        a[2] [0] = AFFc;
        a[3] [0] = AFFd;

        a[0] [1] = AFFe;
        a[1] [1] = AFFf;
        a[2] [1] = AFFg;
        a[3] [1] = AFFh;

        a[0] [2] = AFFi;
        a[1] [2] = AFFj;
        a[2] [2] = AFFk;
        a[3] [2] = AFFl;

        a[0] [3] = 0.0;
        a[1] [3] = 0.0;
        a[2] [3] = 0.0;
        a[3] [3] = 1.0;

        for (i=0;  i<n;  i++) b[i]= &a[i][o];  /* build pointer array */
        minv (b,n);

        /* only take 3 cols of result */
        INVAFFa=  a[0] [0];
        INVAFFb=  a[1] [0];
        INVAFFc=  a[2] [0];
```

```
INVAFFd= a[3] [0];

INVAFFe= a[0] [1];
INVAFFf= a[1] [1];
INVAFFg= a[2] [1];
INVAFFh= a[3] [1];
INVAFFi= a[0] [2];
INVAFFj= a[1] [2];
INVAFFk= a[2] [2];
INVAFFl= a[3] [2];
}

void  get_inverse_AFF2()

/* matrix inverse 3 by 3
see comments in the similar function get_inverse_AFF()
*/
{
int i;
int n;
double *b[RANK];

if (err_numb !=0) return;

n=3;
/* build the matrix for 3x3 */

a[0] [0]= AFF2a;
a[1] [0]= AFF2b;
a[2] [0]= AFF2c;

a[0] [1]= AFF2d;
a[1] [1]= AFF2e;
a[2] [1]= AFF2f;

a[0] [2]= 0.0;
a[1] [2]= 0.0;
a[2] [2]= 1.0;

for (i=0;i<n; i++)  b[i] = &a[i][0];  /* build pointer array */
minv  (b,n);
```

```
/* only take 2cols of result */
INVAFF2a=  a[0] [0];
INVAFF2b=  a[1] [0];
INVAFF2c=  a[2] [0];
INVAFF2d=  a[0] [1];
INVAFF2e=  a[1] [1];
INVAFF2f=  a[2] [1];


}
```

# END OF APPENDIX B

The foregoing description of the principles of my invention is by way of illustration and example only and not by way of limitation. Although several illustrative embodiments of a curved surface image transformation system in accordance with the principles of my invention have been shown and described, other alternative embodiments are possible and would be clear to one skilled in the art upon an understanding of the principles of my invention For example, as earlier mentioned, while h-pass factoring first followed by v-pass factoring second may in some sense be preferred for any page turn that pulls a page down from the top or up from the bottom, v-pass factoring first follovwed by h-pass factoring second may in some sense be preferred for any page turn that curls a page from left to right or from right to left.

## Claims

1. An image special effects system comprising:

    an image processing system (50) coupled to receive an input image signal representing an image and coupled to provide an output image signal, the output image signal representing an operator selected spatial transformation of the image;

    a key processing system (80) coupled to receive at least one input key signal defining a portion of the image selected for viewing and coupled to operate in parallel with the image processing system for generating an output key signal which has undergone the same selected spatial transformation relative to the input key signal as the image; and

    a spatial transformation system (26, 800, 900) coupled to the image processing system and coupled to operate on the input image signal so as to be able by a separable two pass transformation process to spatially transform the input image signal on a folded curved surface.

2. A special effects system according to, claim 1 wherein the spatial transformation system comprises address generator means (720) for producing multi-valued numeric results corresponding to an inverted solution to an h-pass reverse map relation and for evaluating auxiliary numeric results to resolve a multi-valued selection process.

3. A special effects system according to claim 2 wherein the address generator means comprises a mask generator (750) and a plurality of clip generators (825,826) for aiding in the selection of multi-valued numeric results.

4. A special effects system according to claim 1 wherein the spatial transformation system is arranged to perform v-pass operations followed by h-pass operations.

5. A special effects system according to claim 4 wherein the spatial transformation system further comprises an address generator means (720) for producing multi-valued numeric results corresponding to an inverted solution to the h-pass reverse map relation, and means for evaluating auxiliary numeric results to resolve a multi-valued selection process.

6. A special effects system according to claim 5 wherein the evaluating means includes a mask generator (750) and a plurality of clip generators (825,826) to aid in the selection of multi-valued numeric results.

7. A special effects system according to claim 1 wherein the spatial transformation system is arranged to perform h-pass operations followed by v-pass operations.

8. A video transformation system comprising a proportional switcher (640) having first and second video signal inputs and a key signal input, the proportional switcher being operable to generate an output video signal as a combination of video signals received at the first and second video signal inputs in proportion to the key signal input; a video signal source coupled to provide a video signal to the first video signal input of the proportional switcher; and a transformation processing system (600) which is (a) coupled to receive a second video signal and an input key signal defining a region of the second video signal to be included in the output video signal, (b) operable to perform a given spatial transformation upon both the second video signal and the input key signal to produce a spatially transformed second video signal and a spatially transformed key signal, (c) coupled to provide the transformed second video signal to the second video signal input of the proportional switcher and the transformed key signal to the key signal input of the proportional switcher, and (d) operable to spatially transform the second video signal and the input key signal by folding the image represented by the second video signal over itself and the image represented by the key signal over itself.

9. A video transformation system according to claim 8 wherein the transformation processing system comprises means for separably processing each co-ordinate direction of the image represented by the video signals.

10. A video transformation system defined in claim 9 wherein the transformation processing system comprises means for separably processing the transformation of a horizontal co-ordinate direction and a vertical co-ordinate direction, one direction being processed before the other direction.

11. A video transformation system defined in claim 10 wherein the transformation processing system further comprises means for adjusting a fold size by cropping an image in target co-ordinate space.

12. A video transformation system according to claim 10 wherein the transformation processing system further comprises means for folding an image generally from side to side.

13. A video transformation system according to claim 10 wherein the transformation processing system further comprises means for folding an image generally from top to bottom.

14. A video transformation system according to any of claims 8 to 13 wherein the first video signal input is adapted to receive a first signal representing the front view of the image and wherein the second video signal input is adapted to receive a second signal representing the back view of the image to be spatially transformed by folding the image and wherein the front view signal and the back view signal are spatially transformed by a two-pass transformation.

15. A source address generator for use in transforming images represented by a video signal on to folded curved surfaces in a special effects system, the source address generator comprising a processing interface (760) for receiving a set of numeric values and control commands for an image transformation to be applied in an order corresponding to one co-ordinate direction of the image and for distributing these items to the remaining stages in synchronism with their rates of operation; an arithmetic unit (710) for receiving the numeric values and for performing computations in time synchronism with the image to be transformed; a mapping system (720) including specialized circuits capable of sustained rates of computation sufficient to generate at least two candidate addresses related to said co-ordinate direction; and a selector (740) for generating a third address and for selecting either one of the candidate addresses or the third address for outputting the selected address as the source address for a transformation in said co-ordinate direction.

16. A source address generator according to claim 15 further comprising a qualifier system (730) for receiving numeric values to be processed from the arithmetic unit and for performing a computation at the same rate of operation as the mapping system and for presenting numeric results to the selector stage in parallel with the activities of the mapping stage.

17. A source address generator defined in claim 16 further comprising means, responsive to control commands from the interface, for modifying the behaviour of the computation elements of the qualifier equation stage.

18. A source address generator according to claim 17 further comprising a timing controller and mask stage (750) for generating a mask signal that discriminates addresses of an undesired image that correspond to a mirror image of the desired image.

19. A method for generating a special effects image comprising receiving an input image signal representing an image; processing the input image signal to provide an output image signal, the output image signal representing an operator selected spatial transformation of the image; receiving an input key signal defining a portion of the image selected for viewing; processing the input key signal in parallel with the processing of the input image signal to generate an output key signal which has undergone the same selected spatial transformation relative to the input key signal as the image; and by a two pass process spatially transforming the input image signal on a folded curved surface.

20. A method according to claim 19 fwther comprising: producing multi-valued numeric results corresponding to an inverted solution to an h-pass reverse map relation and evaluating auxiliary numeric results to resolve a multi-valued selection process.

21. A method according to claim 19 further comprising: spatially transforming the image on a folded curve using h-pass first operations, followed by v-pass operations.

22. A method according to claim 21 further comprising: producing multi-valued numeric results corresponding to an inverted solution to the v-pass reverse map relation, and evaluating auxiliary numeric results to resolve a multi-valued selection process.

23. A method according to claim 20 or claim 22 further comprising operating a mask generator and a plurality of clip generators to aid in the selection of multi-valued numeric results.

24. A method according to claim 19 further comprising: spatially transforming the image on a folded curve using v-pass first operations, followed by h-pass operations.

25. An image transformation method comprising: proportionally switching first and second image signal inputs and a key signal input to generate an output image signal as a combination of image signals received at the first and second image signal inputs in proportion to the key signal input; providing an image signal source to the first image signal input for its proportional switching; receiving a second image signal and an input key signal defining a region of the second image signal to be included in the output image signal; performing a given spatial transformation upon both the second image signal and the input key signal to produce a spatially transformed second image signal and a spatially transformed key signal; providing the transformed second image signal to the second image signal input for its proportional switching; providing the transformed key signal to the key signal input for its proportional switching; spatially transforming the second image signal and the input key signal by folding the image represented by the second image signal over itself; and separably processing each co-ordinate direction of the image represented by the image signals.

26. A method according to claim 25 wherein the spatial transformation is performed as a concatenation of one dimensional transformations each of which is constituted by repositioning of image elements in a single respective co-ordinate direction.

27. A method according to claim 26 further comprising adjusting a fold size by cropping an image in target co-ordinate space.

28. A method according to claim 27 wherein the first image signal input receives a first signal representing the front view of the image and the second image signal input receives a second signal representing the back view of the image to be spatially transformed by folding the image.

29. An image transformation method according to claim 28 further comprising: spatially transforming the front view signal and the back view signal using a two-pass transformation.

38

FIG. 1 (PRIOR ART)

FIG. 2

ORIGINAL SCAN

FIG. 3

NEW SCAN

FIG. 4

FIG. 5

FIG. 6

FIG. 7

FIG. 9

FIG. 8